# EUROPEAN PATENT APPLICATION

(11) **EP 4 563 216 A1**
(43) Date of publication of application: **04.06.2025**
(21) Application number: 23846432.5
(22) Date of filing: 21.07.2023
(51) Int. Cl.: B01D 61/10, B01D 61/20, B01D 61/58, E03B 1/00, G06F 3/04817, C02F 1/00, C02F 1/44

(54) **WATER TREATMENT PROCESS CALCULATION METHOD, CALCULATION PROGRAM, AND CALCULATION SYSTEM**

(30) Priority: 29.07.2022 JP 2022121168; 29.07.2022 JP 2022121169; 21.02.2023 JP 2023024858
(71) Applicant: Toray Industries, Inc., Tokyo 103-8666 (JP)
(72) Inventor: TOMIOKA Kazunori, Otsu-shi, Shiga 520-8558 (JP); KAWASHIMA Yoshiyuki, Otsu-shi, Shiga 520-8558 (JP); HAGAWA Kazuki, Otsu-shi, Shiga 520-8558 (JP)
(74) Representative: Hoefer & Partner Patentanwälte mbB
(86) International application number: PCT/JP2023/026900
(87) International publication number: WO 2024/024702

(57) **Abstract**

Provided is a water treatment process calculation method comprising: a step in which a main screen for laying out a water treatment process flow, and a plurality of types of unit icons for water treatment unit processes, each provided with at least either an input unit or an output unit, are provided, and an inter-unit icon connection means selects an output unit of one unit icon after a plurality of unit icons have been laid out on the main screen, and subsequently cancels the selection by using an input unit of another unit icon, thereby forming wiring between the two unit icons; a step in which an inter-unit icon wiring maintaining means maintains the wiring such that the wiring does not break even if the placement of a unit icon is changed after wiring; and a step in which an inter-unit icon calculation result linkage means hands over a calculation result from the output unit of one unit icon to the input unit of another unit icon.

## Description

### TECHNICAL FIELD

The present invention relates to a calculation method, a calculation program, and a calculation system for a water treatment process for obtaining treatment water by treating natural water such as river water, lake water, and seawater, or sewage and industrial wastewater.

### BACKGROUND ART

The water treatment process includes water treatment devices for sedimentation separation, flotation separation, centrifugation, coagulation treatment, stirring treatment, aerobic treatment, anaerobic treatment, filtration, squeezing, filter cloth, microfiltration membrane, ultrafiltration membrane, nanofiltration membrane, reverse osmosis membrane, accelerated oxidation, ion exchange, adsorption, absorption, deaeration, crystallization, distillation, heat exchange, mineral addition, and the like, and these water treatment devices are selected or used in combination according to raw water properties and product water applications.

Among these, in recent years, a water treatment process using a membrane separation method has characteristics such as energy saving, space saving, and improvement in treatment water quality, and thus has been expanded in various fields. For example, a microfiltration membrane or an ultrafiltration membrane may be applied to a water purification process for producing industrial water or tap water from river water, ground water, or sewage treatment water, and a reverse osmosis membrane may be applied to seawater desalination. In addition, various water treatment processes have been devised and introduced in which, for example, the sedimentation separation, the flotation separation, the centrifugation, and the coagulation treatment are combined as pretreatments of the separation membranes to stabilize the operability of the separation membranes, or the ion exchange is combined with post-treatment of the separation membranes to produce pure water.

In these various water treatment processes, a treatment flow of the water treatment process using each water treatment device is determined in advance, and the calculation of the water treatment process such as water balance calculation, heat balance calculation, and substance balance calculation is generally executed by simulation software on a computer along the treatment flow. The simulation software for designing a water treatment plant is disclosed and provided by a membrane manufacturer or an engineering company, and can be used not only by an engineer related to a water treatment but also by a user who does not have knowledge of a water treatment or engineering.

For example, Patent Literature 1 describes a method for creating a treatment flow of a water treatment process by arranging water treatment devices or the like using coordinates on a flow screen. Patent Literature 2 also describes a method of arranging water treatment devices or the like on a treatment flow screen, wiring (streaming) the water treatment devices or the like, and then performing calculation. Further, Patent Literature 3 describes a method in which water treatment devices or the like are represented by icons arranged on a design screen, one icon is selected, and when the selection is released on another icon, the icons are wired.

However, in the water treatment process flow, when final treatment water quality or wastewater water quality does not meet requirements, it is necessary to add a water treatment device or change the treatment flow, and in Patent Literature 1, the arrangement of the water treatment devices or the like is fixed in coordinates, and thus it is not easy to add and remove the water treatment device, and it is difficult to change the setting in relation to cooperation with the water treatment devices before and after the water treatment device to be added or removed. Patent Literature 2 does not clearly describe a method for creating a treatment flow, and has a problem in operability in changing the water treatment device. On the other hand, Patent Literature 3 describes a method for easily connecting water treatment devices, and there are a plurality of inputs and outputs in the individual water treatment devices, but a method for connecting a plurality of inputs and outputs is not shown, there is no description about a case of adding or removing a water treatment device, and there is a problem that the water treatment process cannot be easily calculated.

### CITATION LIST

### PATENT LITERATURE

Patent Literature 1: JPH09-297782A
Patent Literature 2: JP61073303B
Patent Literature 3: JP2017-966A

### SUMMARY OF INVENTION

### TECHNICAL PROBLEM

An object of the present invention is to provide a water treatment process calculation method which is convenient for a user in the water treatment process for obtaining treatment water by treating natural water such as river water, lake water and seawater, or sewage and industrial wastewater.

### SOLUTION TO PROBLEM

(1) A water treatment process calculation method, which is a process calculation method for a water treatment process operated on a computer, having:
   a main screen configured to arrange a water treatment process flow; and
   a plurality of unit icons for water treatment unit processes each having at least one of an input part and an output part, the method including:
      a step in which an inter-unit icon connection means performs wiring between two unit icons by arranging the plurality of unit icons on the main screen, selecting an output part of one unit icon and releasing the selection at an input part of another unit icon;
      a step in which an inter-unit icon wiring maintaining means maintains the wiring so as not to break even if an arrangement of the unit icons is changed after the wiring is performed; and
      a step in which an inter-unit icon calculation result transfer means takes over a calculation result from the output part of the one unit icon to the input part of the other unit icon.
(2) The water treatment process calculation method according to (1), having:
   a determination means determining whether a connection is restricted in the connection means; and
   a set information recording means recording set information on the output part or the input part for each of the unit icons, in which
   the determination means compares the set information on the output part with the set information on the input part of the unit icons to be connected by the connection means, and restricts the connection by the determination means when the set information is out of a range of a set value.
(3) The water treatment process calculation method according to (2), in which the set information recorded in the set information recording means is a set value or a set range of a pressure.
(4) The water treatment process calculation method according to (2) or (3), in which the set information recorded in the set information recording means is a set value or a set range of at least one of a pressure, a flow rate, a temperature, and a water quality.
(5) The water treatment process calculation method according to any one of (1) to (4), further including: a step in which an inter-unit icon arrangement interval automatic adjustment means automatically adjusts an arrangement interval between the unit icons of the water treatment processes in consideration of the wiring between the unit icons when the plurality of unit icons are arranged on the main screen.
(6) The water treatment process calculation method according to any one of (1) to (5), in which the unit icon is at least one of the following A to H:
   A. a water flow (raw water, product water, and wastewater);
   B. a water treatment device (sedimentation separation, flotation separation, centrifugation, coagulation treatment, stirring treatment, aerobic treatment, anaerobic treatment, accelerated oxidation, ion exchange, adsorption, absorption, deaeration, crystallization, distillation, heat exchange, and mineral addition);
   C. a membrane filtration device 1 (filter cloth, microfiltration membrane, and ultrafiltration membrane);
   D. a membrane filtration device 2 (nanofiltration membrane and reverse osmosis membrane);
   E. an energy recovery device (reverse pump type, water turbine type, pressure exchange type, and turbocharger);
   F. a chemical liquid injection device;
   G. devices (pump, blower, and compressor); and
   H. piping connection (mixing and branch).
(7) The water treatment process calculation method according to any one of (1) to (6), further including: a step in which an arrangement of all or a part of the unit icons is predefined, and a unit icon group arrangement means arranges the unit icons as a unit icon group on the main screen all at once.
(8) The water treatment process calculation method according to (7), in which a target unit icon of the unit icon group arrangement means is an ultrafiltration membrane, a microfiltration membrane, or an energy recovery device.
(9) The water treatment process calculation method according to any one of (1) to (8), in which when the unit icon is selected, a connectable unit icon is displayed on the screen so as to be visually distinguished.
(10) The water treatment process calculation method according to (9), in which a means for displaying the unit icon on the screen so as to be visually distinguished changes display colors of the input part and the output part for which no connection is restricted.
(11) The water treatment process calculation method according to (9), in which
   a means for displaying the unit icon on the screen so as to be visually distinguished changes a auxiliary line to the input part and the output part for which no connection is restricted.
(12) The water treatment process calculation method according to (2), in which when a connection that is a restricted connection recorded in the set information recording means occurs between the output part and the input part of the unit icons in the connection means, the output part of the unit icon and the unit icon for which no connection is restricted in the determination means are displayed on a connection restriction information display means.
(13) The water treatment process calculation method according to any one of (1) to (12), further including: a step in which a data input mode switching means switches the main screen of the water treatment process flow to a data input mode after the plurality of unit icons are arranged on the main screen, and the wiring between the unit icons is performed; and
   a step in which a water treatment process calculation means executes a process calculation after a target unit icon is selected and an operating condition value is set.
(14) The water treatment process calculation method according to any one of (1) to (13), further including: a step of in which an operating condition screen display means displays an operating condition screen after an operating condition value of the unit icon automatically set according to a type of the icon is input as an initial value.
(15) The water treatment process calculation method according to (14), further including: a step in which an automatic calculation means automatically calculates the initial value based on a fixed value or at least one of a water flow rate and a water quality of the input part and the output part.
(16) A water treatment process calculation program to perform process calculation of a water treatment process, causing a computer to function as:
   a water treatment process flow display means configured to display a water treatment process flow on a main screen;
   a unit icon input and output means for a water treatment unit process including at least one of an input part and an output part;
   an inter-unit icon connection means configured to perform wiring between two unit icons by arranging a plurality of unit icons on the main screen, selecting an output part of one unit icon and release the selection at an input part of another unit icon;
   an inter-unit icon wiring maintaining means configured to maintain the wiring so as not to break even if an arrangement of the unit icons is changed after the wiring is performed; and
   an inter-unit icon calculation result transfer means configured to take over a calculation result from the output part of the one unit icon to the input part of the other unit icon.
(17) The water treatment process calculation program according to (16), further causing the computer to function as:
   a determination means configured to determine whether the connection is restricted in the connection means;
   a set information recording means configured to record set information on the output part or the input part for each of the unit icons; and
   a connection restriction means configured to cause the determination means to compare the set information on the output part with the set information on the input part of the unit icons to be connected in the connection means, and restrict the connection when the set information is out of a range of a set value.
(18) The water treatment process calculation program according to (17), in which the set information recorded in the set information recording means is a set value or a set range of a pressure.
(19) The water treatment process calculation program according to (17), in which the set information recorded in the set information recording means is a set value or a set range of at least one of a pressure, a flow rate, a temperature, and a water quality.
(20) The water treatment process calculation program according to (16) or (17), further causing the computer to function as:
   an inter-unit icon arrangement interval automatic adjustment means configured to automatically adjust an arrangement interval between the unit icons of the water treatment processes in consideration of the wiring between the unit icons when the plurality of unit icons are arranged on the main screen.
(21) The water treatment process calculation program according to any one of (16) to (20), in which the unit icon is at least one of the following A to H:
   A. a water flow (raw water, product water, and wastewater);
   B. a water treatment device (sedimentation separation, flotation separation, centrifugation, coagulation treatment, stirring treatment, aerobic treatment, anaerobic treatment, accelerated oxidation, ion exchange, adsorption, absorption, deaeration, crystallization, distillation, heat exchange, and mineral addition);
   C. a membrane filtration device 1 (filter cloth, microfiltration membrane, and ultrafiltration membrane);
   D. a membrane filtration device 2 (nanofiltration membrane and reverse osmosis membrane);
   E. an energy recovery device (reverse pump type, water turbine type, pressure exchange type, and turbocharger);
   F. a chemical liquid injection device;
   G. devices (pump, blower, and compressor); and
   H. piping connection (mixing and branch).
(22) The water treatment process calculation program according to any one of (16) to (21), further causing the computer to function as:
   a unit icon group arrangement means configured to predefine an arrangement of all or a part of the unit icons, and arrange the unit icons as a unit icon group on the main screen all at once.
(23) The water treatment process calculation program according to (22), in which a target unit icon of the unit icon group arrangement means is an ultrafiltration membrane, a microfiltration membrane, or an energy recovery device.
(24) The water treatment process calculation program according to any one of (16) to (23), further causing the computer to function as:
   a display means configured to display a connectable unit icon on the screen so as to be visually distinguished when the unit icon is selected.
(25) The water treatment process calculation program according to (24), in which the display means changes display colors of the input part and the output part for which no connection is restricted.
(26) The water treatment process calculation program according to (24), in which the display means outputs an auxiliary line to the input part and the output part for which no connection is restricted.
(27) The water treatment process calculation program according to any one of (24) to (26), in which when a connection that is a restricted connection recorded in the set information recording means occurs between the output part and the input part of the unit icons in the connection means, the output part of the unit icon and the unit icon for which no connection is restricted in the determination means are displayed on a connection restriction information display means.
(28) The water treatment process calculation program according to any one of (16) to (24), further causing the computer to function as:
   a data input mode switching means configured to switch the main screen of the water treatment process flow to a data input mode after the plurality of unit icons are arranged on the main screen, and the wiring between the unit icons is performed; and
   a water treatment process calculation means configured to set an operating condition value to the unit icon.
(29) The water treatment process calculation program according to any one of (16) to (24), further causing the computer to function as:
   an operating condition setting means configured to input an operating condition value of the unit icon automatically set according to a type of the icon as an initial value; and
   an operating condition screen display means configured to display an operating condition screen.
(30) The water treatment process calculation program according to any one of (16) to (24), further causing the computer to function as:
   an automatic calculation means configured to automatically calculate the initial value based on a fixed value or at least one of a water flow rate and a water quality on an input side and an output side.
(31) A computer-readable recording medium storing the water treatment process calculation program according to any one of (16) to (30).
(32) A water treatment process calculation system, in which the recording medium according to (31) is a server, and a water treatment process is calculable by accessing the server via a browser.

### ADVANTAGEOUS EFFECTS OF INVENTION

According to the present invention, it is possible for any user to very easily create a treatment flow which is important in the calculation of the water treatment process, and accordingly to efficiently calculate the water treatment process.

### BRIEF DESCRIPTION OF DRAWINGS

[FIG. 1] FIG. 1 is a flowchart illustrating an example of a water treatment process of the present invention.
[FIG. 2] FIG. 2 is a schematic diagram illustrating an embodiment of the present invention.
[FIG. 3] FIG. 3 is a schematic diagram illustrating an embodiment of the present invention.
[FIG. 4] FIG. 4 is a schematic diagram illustrating an embodiment of the present invention.
[FIG. 5] FIG. 5 is a schematic diagram illustrating an embodiment of the present invention.
[FIG. 6] FIG. 6 is a schematic diagram illustrating an embodiment of the present invention.
[FIG. 7] FIG. 7 is a schematic diagram illustrating an embodiment of the present invention.
[FIG. 8] FIG. 8 is a diagram illustrating an example of a water treatment process calculation program of the present invention.
[FIG. 9] FIG. 9 is a diagram illustrating an input and output part of unit icon A of a water treatment unit process to which the present invention is applied.
[FIG. 10] FIG. 10 is a diagram illustrating an input and output part of unit icon B of the water treatment unit process to which the present invention is applied.
[FIG. 11] FIG. 11 is a diagram illustrating an input and output part of unit icon C of the water treatment unit process to which the present invention is applied.
[FIG. 12] FIG. 12 is a diagram illustrating an input and output part of unit icon D of the water treatment unit process to which the present invention is applied.
[FIG. 13] FIG. 13 is a diagram illustrating an input and output part of unit icon E of the water treatment unit process to which the present invention is applied.
[FIG. 14] FIG. 14 is a diagram illustrating an input and output part of unit icon F of the water treatment unit process to which the present invention is applied.
[FIG. 15] FIG. 15 is a diagram illustrating an input and output part of unit icon G of the water treatment unit process to which the present invention is applied.
[FIG. 16] FIG. 16 is a diagram illustrating an input and output part of unit icon H of the water treatment unit process to which the present invention is applied.
[FIG. 17] FIG. 17 is a schematic diagram illustrating an embodiment of the present invention. This is an example of an operation means for selecting unit icons of water treatment unit processes, arranging the unit icons on a screen, and connecting the icons, in a water treatment process calculation method to which the present invention is applied.
[FIG. 18] FIG. 18 is a schematic diagram illustrating an embodiment of the present invention. This is an example of an operation means when a connection is made to a unit icon for which a connection is restricted in the water treatment process calculation method to which the present invention is applied.
[FIG. 19] FIG. 19 is a schematic diagram illustrating an embodiment of the present invention. This is an example of an operation means when a connection is made to a unit icon for which a connection is restricted in the water treatment process calculation method to which the present invention is applied.
[FIG. 20] FIG. 20 is a schematic diagram illustrating an embodiment of the present invention. This is an example of an operation means when a connection is made to a unit icon for which a connection is restricted in the water treatment process calculation method to which the present invention is applied.
[FIG. 21] FIG. 21 is a schematic diagram illustrating an embodiment of the present invention.
[FIG. 22] FIG. 22 is a schematic diagram illustrating an embodiment of the present invention.

### DESCRIPTION OF EMBODIMENTS

Hereinafter, the present invention will be described in more detail based on embodiments shown in the drawings. Hereinafter, a water treatment process flow using an ultrafiltration membrane and a reverse osmosis membrane will be described as an example, but the present invention is not limited to the following embodiments.

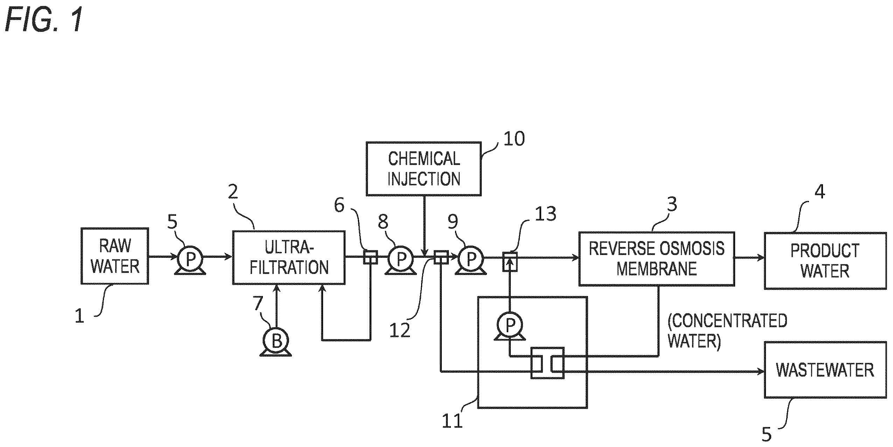

The water treatment process flow of the present embodiment is, for example, as illustrated in FIG. 1, a flow in which raw water 1 is treated by using a membrane treatment method of an ultrafiltration membrane 2 and a reverse osmosis membrane 3 to obtain product water 4. In the water treatment process, there are always three types of water flows, i.e., raw water, product water, and wastewater, and the raw water is treated by each water treatment device and finally separated into the product water and the wastewater. The raw water is a solution treated in the water treatment process, and examples thereof include river water, ground water, seawater, sewage treatment water, industrial wastewater, and culture solution.

The raw water 1 is pumped by a raw water pump 5 to the ultrafiltration membrane 2 to be filtered. FIG. 1 illustrates the ultrafiltration membrane, but a microfiltration membrane may also be used, a pore diameter of a separation membrane used in the ultrafiltration membrane or the microfiltration membrane is not particularly limited as long as it is porous, and membranes having different pore diameters may be used depending on the properties or an amount of desired water to be treated. Examples of a shape of the separation membrane include, but are not limited to, a hollow fiber membrane, a flat membrane, a tubular membrane, and a monolith membrane. A material of the separation membrane preferably includes at least one selected from the group consisting of polyethylene, polypropylene, polyacrylonitrile, ethylene-tetrafluoroethylene copolymer, polychlorotrifluoroethylene, polytetrafluoroethylene, polyvinyl fluoride, tetrafluoroethylene-hexafluoropropylene copolymer, tetrafluoroethylene-perfluoroalkyl vinyl ether copolymer, chlorotrifluoroethylene-ethylene copolymer, polyvinylidene difluoride, polysulfone, cellulose acetate, polyvinyl alcohol, polyethersulfone and inorganic materials such as ceramics. The material of the separation membrane is more preferably polyvinylidene difluoride (PVDF) from the viewpoint of membrane strength and chemical resistance, and is still more preferably polyacrylonitrile from the viewpoint of high hydrophilicity and high stain resistance. Further, the ultrafiltration membrane has been described, and it is common that the membrane is inserted into a casing to form a module, and a plurality of the modules are used to form a unit depending on the operating conditions (raw water properties, amount of filtered water). A membrane filtration method may be a dead end filtration type module or a cross-flow filtration type, and the dead end filtration type is preferable from the viewpoint of low energy consumption. The module may be a pressurized type or an immersed type, and the pressurized type is preferable from the viewpoint that a high flow flux operation is possible. In addition, the module may be an external pressure type in which raw water is supplied from the outside of the membrane to obtain permeated water from the inside of the membrane or an internal pressure type in which raw water is supplied from the inside of the membrane to obtain permeated water from the outside of the membrane, and the external pressure type is preferable from the viewpoint of simplification of pretreatment.

FIG. 1 illustrates a pressurized type ultrafiltration membrane. Although an immersion type separation membrane is not illustrated, in order to filter a liquid to be treated with the immersion type separation membrane, a pump or the like may be provided on a secondary side of immersion type membrane separation to perform suction, and the liquid to be treated may be filtered using a head pressure difference as a driving force by making a liquid level in a filtration water tank lower than a liquid level in a tank for a liquid to be treated.

In the case of immersion type membrane separation, air washing is performed continuously or intermittently with air supplied from an air blower. Air is supplied from the air blower to an immersed membrane through an air diffuser disposed below the immersion type separation membrane. A resulting flow of a liquid or a gas-liquid mixed phase parallel to a membrane surface separates a suspension adhering to the membrane surface from the membrane surface. In addition, a normal operation sequence includes a filtration step and a stop step, and in general, an operation is performed while the suspension accumulated in the filtration step is peeled from the membrane surface in the stop step while the air washing with the air blower is maintained in both steps.

Here, a membrane to be used for a membrane element constituting the immersion type separation membrane is not particularly limited, and may be a flat membrane or a hollow fiber membrane. A structure of the membrane is not particularly limited, and for example, may be any of a flat membrane element structure, a flat membrane element structure in which a flat membrane is wound in a spiral shape, a flat membrane element structure having flexibility and including a flat membrane pair having two flat membranes arranged such that surfaces on a transmission side face each other and a water collection channel provided between the flat membranes, and a sealing portion that seals a space between the flat membranes at peripheral portions of the flat membranes, and a hollow fiber membrane element structure obtained by bundling a plurality of hollow fiber membranes.

The reverse osmosis membrane includes, as reverse osmosis membrane elements, a spiral-type element that is processed and disposed in a device and in which a membrane having a flat membrane shape is wound around a water collection pipe, a plate and frame-type element modularized by laminating flat membranes attached to both surfaces of a plate type support plate via a spacer at a constant interval, a tubular type element using a tubular membrane, and a hollow fiber membrane element in which hollow fiber membranes are bundled and stored in a case. The element may be in any form, and the spiral-type element is preferable from the viewpoint of operability and compatibility. The number of elements can be freely set according to the membrane performance. As a material, for example, polyamides, polypiperazine amides, polyester amides, or crosslinked water-soluble vinyl polymers can be used, and as a membrane structure thereof, a membrane (asymmetric membrane) having a dense layer on at least one surface of the membrane and fine pores having gradually large pore diameters from the dense layer toward the inside or the other surface of the membrane or a membrane (composite membrane) having a very thin separation functional layer made of another material on the dense layer of such an asymmetric membrane can be used. However, the composite membrane is preferable for high water production, and among these membranes, a polyamide composite membrane is preferable and a piperazine polyamide composite membrane is more preferable from the viewpoint of a permeation amount, chemical resistance, and the like.

The ultrafiltration membrane 2 is operated while removing suspension (fouling) captured with the ultrafiltration membrane by periodically performing a physical washing step (backflow washing, air washing, draining wastewater, and supplying water) after a prescribed period of time elapses since the filtration step. In the backwash washing, water filtered by the ultrafiltration membrane 2 is generally used, is branched from a branch 6 of a filtrate water line, and is used for backwashing, or although not illustrated, the filtrate water is pumped by a backwash pump from a filtrate water tank for temporarily storing the filtrate water to the ultrafiltration membrane. An air washing blower 7 is provided for the air washing. The air washing blower is illustrated in the figure, and an air generation source may be a compressor. In the case of the compressor, an oil-free type is preferable such that no oil in the air is supplied to the separation membrane.

In addition, it is preferred to repeat the filtration and the physical washing a plurality of times and then perform chemical liquid enhanced backwashing (CEB). The CEB is performed by supplying a chemical liquid to backwash water using a backwash water and chemical liquid injection pump (not illustrated) during backwashing.

As the chemical liquid, a water solution containing a chemical such as hydrochloric acid, sulfuric acid, nitric acid, citric acid, oxalic acid, ascorbic acid, sodium hydrogen sulfite, sodium hydroxide, and sodium hypochlorite can be used. In particular, an oxidizing agent such as sodium hypochlorite is effective for removing contaminants containing organic substances such as seawater, river water, and sewage treatment water. A concentration of sodium hypochlorite is preferably 10 mg/L to 10,000 mg/L. This is because if the concentration is less than 10 mg/L, a washing effect is insufficient, and if the concentration is more than 10,000 mg/L, a cost of the chemical becomes high, which is uneconomical. From the viewpoint, the concentration is more preferably 100 mg/L to 5,000 mg/L.

After the chemical liquid is added, the washing effect is improved when a contact time is provided for a certain period of time. A time for which the membrane is brought into contact with the chemical liquid is preferably about 5 minutes to 3 hours. This is because if the contact time is too short, a washing power is weak, and if the contact time is too long, a time for stopping the device is long, and an operation efficiency of the device decreases, which is economical disadvantageous.

Next, the water filtered through the ultrafiltration membrane 2 is pumped by a supply pump 8, pressurized by a high pressure pump 9, and then supplied to the reverse osmosis membrane 3. A chemical such as a sterilizer or a scale inhibitor is injected between the supply pump 8 and the high pressure pump 9 by a chemical injection device 10 in order to prevent fouling or scale of the reverse osmosis membrane 3.

In the reverse osmosis membrane 3, when a salt concentration of raw water is high through seawater desalination or the like, a supply pressure may be increased to about 8 MPa by the high pressure pump 9 in order to obtain an effective osmotic pressure. Therefore, an energy recovery device 11 may be provided in order to effectively utilize the energy. The illustrated energy recovery device is a pressure exchange type, and includes an energy recovery device main body and a booster pump. The energy recovery device applies pressure of concentrated water to be discharged from the reverse osmosis membrane 3 to water to be supplied to the reverse osmosis membrane, which is branched at a branch 12 from the middle between the supply pump 8 and the high pressure pump 9. The concentrated water of the reverse osmosis membrane 3 is discharged as concentrated water after pressure loss in a raw water side channel of the reverse osmosis membrane 3, and has a pressure lower than a supply pressure of the reverse osmosis membrane 3 due to piping pressure loss of a concentrated water line or pressure loss of the energy recovery device, even though the pressure is applied to the water to be supplied to the reverse osmosis membrane, which is branched from the middle between the supply pump 8 and the high pressure pump 9, the pressure of the reverse osmosis membrane 3 is lower than a discharge pressure of the high pressure pump 9, and thus the boost pump is installed to increase the pressure. The pressurized supply water is merged at a junction 13 between the high pressure pump 9 and the reverse osmosis membrane 3. Although the pressure exchange type is illustrated in the figure, the reverse pump type, the water turbine type, and the turbocharger may be used.

As described above, the water treatment process flow is constituted by a combination of the water flows (raw water, product water, and wastewater), the water treatment devices (ultrafiltration membrane and reverse osmosis membrane (although not illustrated, sedimentation separation, flotation separation, centrifugation, coagulation treatment, stirring treatment, aerobic treatment, anaerobic treatment, filtration, squeezing, filter cloth, nanofiltration membrane, accelerated oxidation, ion exchange, adsorption, absorption, deaeration, crystallization, distillation, heat exchange, and mineral addition may be used), the energy recovery devices (reverse pump type, water turbine type, pressure exchange type, and turbocharger), a chemical liquid injection device, equipment (pump, blower, compressor, tank), and piping connection (mixing and branching), and the water treatment process is calculated using these elements individually and in conjunction with each other.

Therefore, it is necessary to examine the required specifications while changing the treatment flow using these elements, and a method for easily creating and changing a water treatment process flow has not been established.

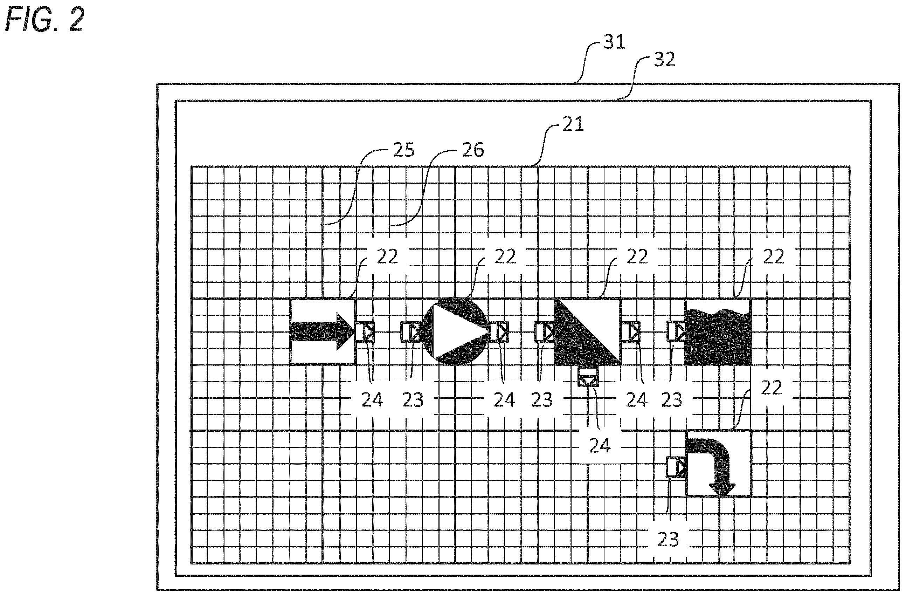

A first embodiment of the present invention relates to the creation of the water treatment flow in the water treatment process calculation. The present invention is characterized by having the following methods illustrated in FIG. 2, FIG. 3, and FIG. 4, and relates to methods for arranging, adding, and deleting water treatment unit icons and connecting the water treatment unit icons to one another, specifies the requirements from the viewpoint of easily constructing a water treatment process flow, and is not limited to the following embodiments.

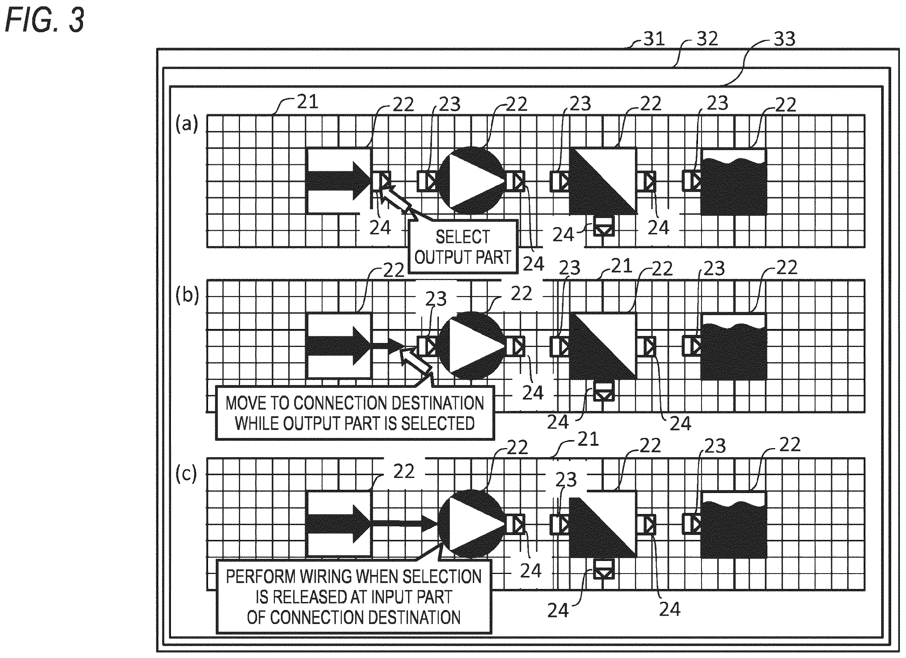

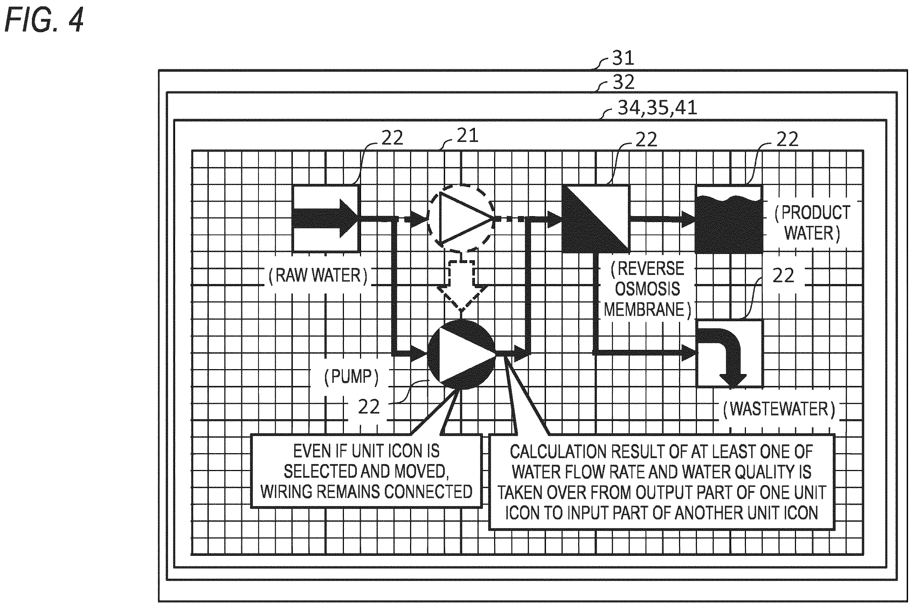

The process calculation for such a water treatment process is generally performed by simulating a water treatment flow with a water treatment process calculation program on a computer 31 according to a program as illustrated in FIG. 2. A water treatment process calculation method has the main screen 21 for arranging a water treatment process flow, and a plurality of unit icons 22 of water treatment unit processes each having at least one of an input part or an output part, and includes: a step in which an inter-unit icon connection means 33 selects an output part of one unit icon and releasing the selection at an input part of another unit icon as illustrated in FIG. 3 after the plurality of unit icons are arranged on the main screen 21, thereby performing wiring between the two unit icons; a step in which an inter-unit icon wiring maintaining means 34 maintains the wiring so as not to break even if the arrangement of the unit icons is changed after the wiring is performed as illustrated in FIG. 4; and a step in which an inter-unit icon calculation result transfer means 35 takes over a calculation result from the output part of the one unit icon to the input part of the other unit icon.

In addition, although not illustrated, even when the unit icon is moved, there is no influence on the water treatment process calculation, even when the water treatment process is changed accordingly, both the wiring between the input part and the output part can be deleted by selecting a unit icon arranged on the main screen 21 and deleting the same, and even when a unit icon is added, the water treatment process can be easily changed by selecting the new unit icon, arranging the unit icons on the main screen 21, and wiring the unit icons as described above.

In addition, it is preferred that each unit icon is displayed as a tool bar around the main screen 21, when a water treatment process flow is created, the unit icon can be selected and arranged on the main screen 21, or as illustrated in FIG. 4, the unit icon is an icon that easily images the water treatment unit process.

Further, it is more preferred that grid lines are displayed on the main screen 21 to define positions at which the unit icons are arranged. Specifically, it is preferred that a main grid interval of the grid lines is larger than that of the unit icons, and the number of sub-grids between the main grids is an even number.

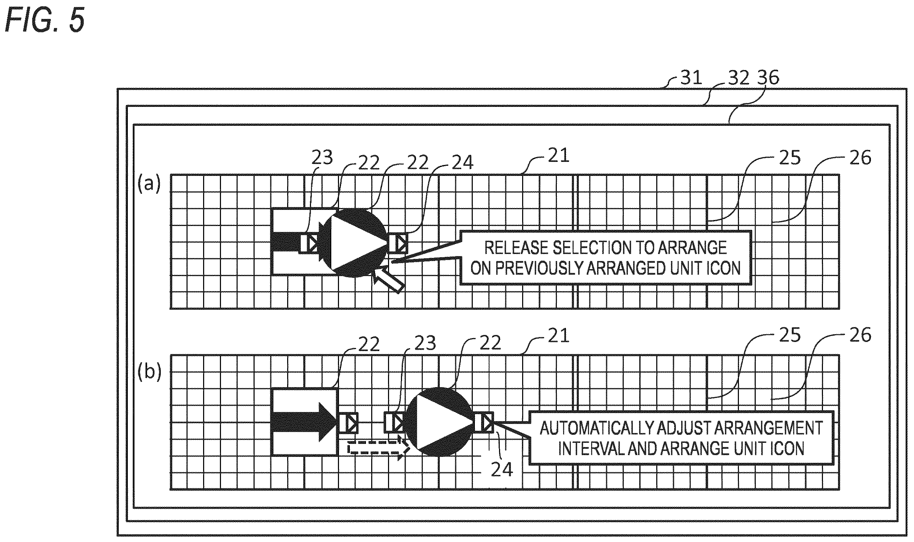

Further, as illustrated in FIG. 5, with the above-described definition, the water treatment process calculation method further includes a step of an inter-unit icon arrangement interval automatic adjustment means 36 automatically adjusting an arrangement interval between the unit icons of the water treatment processes in consideration of the wiring between the unit icons when the plurality of unit icons 22 are arranged on the main screen 21.

When the unit icons are arranged on the main screen 21, the unit icons are arranged by releasing the selection of the unit icons at any position on the main screen 21. However, when a unit icon overlaps with the previously arranged unit icon or a distance between the unit icons is short at the position at which the selection is released, the wiring cannot be performed, and thus a position of the unit icon is automatically adjusted. Accordingly, the distance for wiring can be set appropriately, and the water treatment process flow can be easily seen, and thus the operability at a design stage can be improved.

The arrangement of the unit icons is preferably defined such that centers of the unit icons of the water treatment processes are arranged at intersections of the main grid lines in vertical and horizontal directions or intersections of the main grid lines and the sub-grid lines. Therefore, it is more preferred that a main body of the unit icon (portion without the input part and the output part) is a square or a circle.

The unit icon represents the water treatment unit process, and is at least one of the following A to H.
A. water flow (raw water, product water, and wastewater)
B. a water treatment device (sedimentation separation, flotation separation, centrifugation, coagulation treatment, stirring treatment, aerobic treatment, anaerobic treatment, accelerated oxidation, ion exchange, adsorption, absorption, deaeration, crystallization, distillation, heat exchange, mineral addition)
C. a membrane filtration device 1 (filter cloth, microfiltration membrane, ultrafiltration membrane)
D. a membrane filtration device 2 (nanofiltration membrane, reverse osmosis membrane)
E. an energy recovery device (reverse pump type, water turbine type, pressure exchange type, turbocharger)
F. a chemical liquid injection device
G. devices (pump, blower, compressor)
H. piping connection (mixing, branch)

With a combination of these unit icons, it is possible to construct any water treatment process flow and execute the process calculation.

The water treatment process calculation method further includes a step of predefining an arrangement of all or a part of the unit icons, and arranging the unit icons as a unit icon group on the main screen all at once by a unit icon group arrangement means 37.

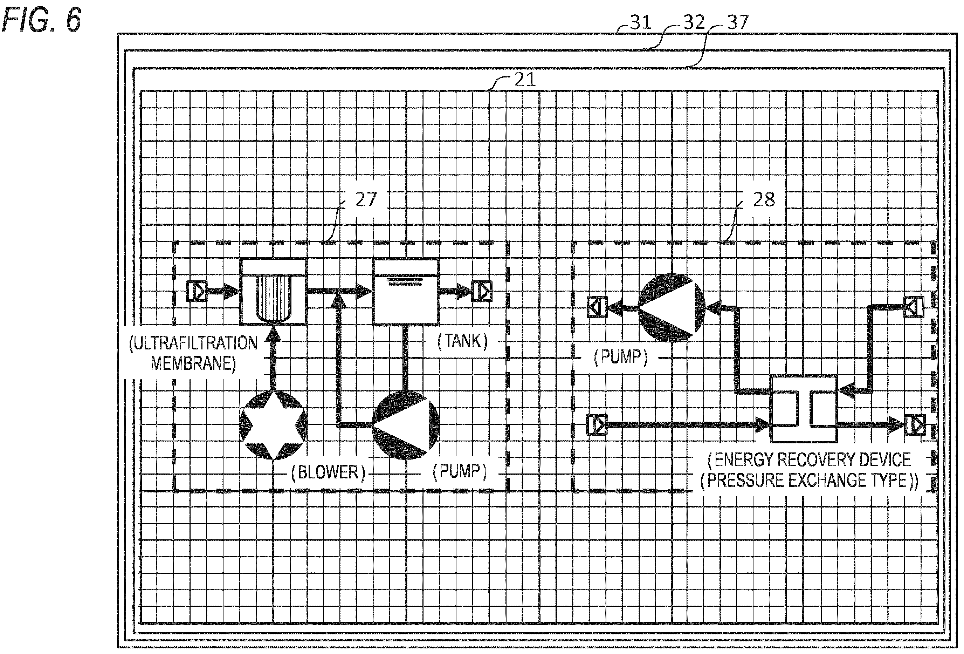

As illustrated in FIG. 1, the ultrafiltration membrane or the microfiltration membrane is generally operated while repeating the filtration step and the physical washing step by providing a pump, a blower, a compressor, or the like instead of using a single membrane device, and similarly, the energy recovery device also is not used as a single device, but is used in combination with a pump or the like. Therefore, by registering the unit icons as a group and arranging the unit icons as a group on the main screen 21 by the unit icon group arrangement means 37, necessary units can be arranged without omission, and the water treatment process flow can be easily created. As an example, FIG. 6 illustrates a unit icon group of an ultrafiltration membrane (pressurized type) and an energy recovery device (pressure exchange type).

As described above, when the plurality of unit icons are arranged on the main screen 21, the wiring between the unit icons is performed, and a water treatment process flow is determined, various data for executing a process calculation is input. In this case, the water treatment process calculation method further includes a step of switching the main screen 21 from a current water treatment process flow creation mode to a data input mode by a data input mode switching means 38, and a step of selecting a target unit icon, setting operating condition values, and then performing a process calculation by a water treatment process calculation means 39. The mode switching is intended to clarify a calculation procedure and to guide the user to respond to a process design in a step-by-step manner.

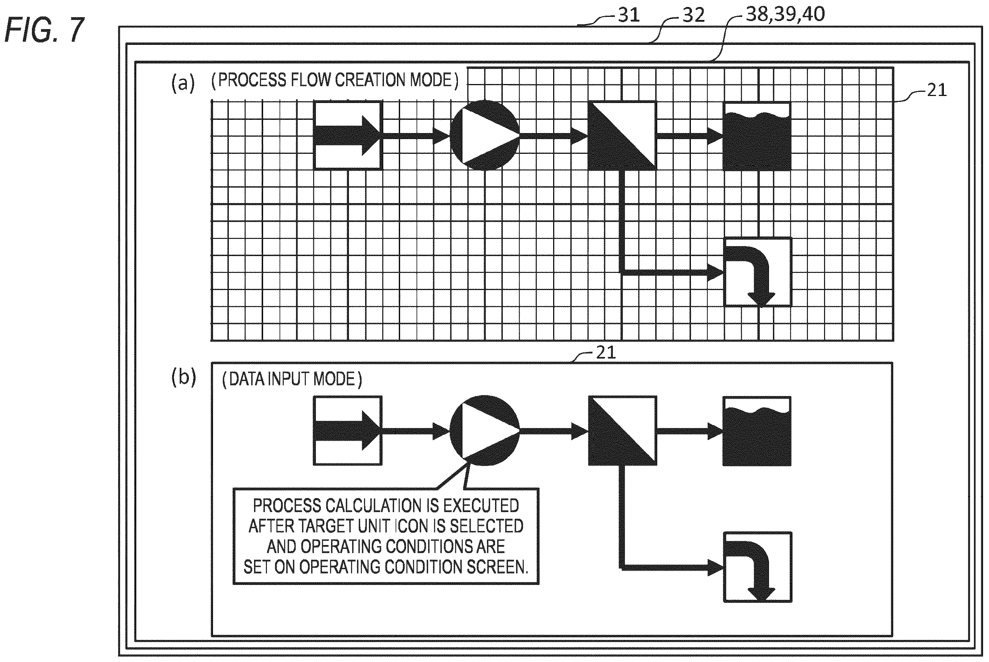

FIG. 7 illustrates an example of switching to the data input mode, and it is preferred that, for example, in the data input mode, the grid lines (main grid lines 25 and sub-grid lines 26) present on the main screen 21 in the process flow creation are deleted by switching to the data input mode, and it becomes clear that the main screen 21 is changed to the data input mode. Further, the main screen or a color of the unit icons may be changed, or the mode may be displayed on the main screen.

In the data input mode, the operating condition values of each unit icon are input, and the type of operating conditions to be set differs according to the type of the icons, and the water treatment process calculation method further includes a step of selecting the target unit icon to display an operating condition screen after the automatically set operating condition values are input as initial values in an operating condition screen display means 40.

The unit icons are the water treatment unit processes and have different roles. Therefore, the operating condition values are also different, and it is necessary to input the respective conditions. Specifically, the operating condition values as shown in Table 1 are input. However, the operating condition values described in Table 1 are not limited, and are shown as an example.

**Table 1**

| Types of unit icon | | Operating condition input items |
|---|---|---|
| Water flow | Raw water | Amount, type, and water quality of raw water (including water temperature) |
| | Product water | Amount and water quality of product water |
| | Wastewater | Amount and water quality of wastewater |
| | Sedimentation separation, flotation separation, centrifugation, coagulation treatment, and stirring treatment | Residence time, treatment pH, type of coagulant, amount of coagulant added, and stirring speed and strength |
| | Aerobic treatment and anaerobic treatment | Residence time, MLSS, amount of air diffusion, oxygen transfer efficiency, operation water depth, and nitrification and denitrification rate |
| | Sand filtration | Filtration flow flux, type and amount of sand filtration media, and physical washing method (backwash amount and time, air washing amount and time, type and amount of chemical washing agent added, physical washing procedure, and the like) |
| Water treatment device | Squeezing | Squeezing area, squeezing pressure, and squeezing cycle |
| | Ion exchange, adsorption, and absorption | Media specifications (type, amount of added, and layer structure), regeneration treatment specifications (type of chemical, amount of chemical added, pH, contact time and amount, and the like), amount and water quality of supply water (including setting for each ion), amount and water quality of treatment water, deterioration rate coefficient, post-treatment type, and standby unit operation method |
| | Deaeration | Device type, amount and water quality of supply water (including setting for each ion), amount and water quality of treated water, physical washing method (backwash amount and time, air washing amount and time, type and amount of chemical washing agent added, and the like) |
| | Crystallization | Device type, amount and water quality of supply water (including solubility of target ion), amount and water quality of treated water (including temperature), time, and efficiency |
| | Distillation and heat exchange | Device type, amount and water quality of supply water (including setting for each ion), amount and water quality of treated water (including temperature), contact time, and efficiency |
| | Mineral addition | Amount and water quality of supply water (including temperature, pH, and details of each ion), amount and water quality of treated water (including temperature and pH), type and amount of chemical added, residence time, addition cycle, and stirring time (including strength) |
| Membrane filtration device 1 | Filter cloth, microfiltration membrane, and ultrafiltration membrane | Membrane type, module type (including membrane area), device configuration (number of modules, number of sequences, and the like), filtration flow flux, physical washing conditions (backwashing, air washing, wastewater, water supply time and flow rate, and each step sequence of physical washing), chemical liquid enhanced washing conditions (type and amount of chemical added, immersion time, pre-and post-physical washing conditions and cycle, and each step sequence of chemical liquid enhanced washing), high-concentration chemical liquid washing conditions (type and amount of chemical added, immersion time, pre-and post-physical washing conditions and cycle, and each step sequence of high-concentration chemical liquid washing), pretreatment type, amount of supply water, amount and water quality of treated water, deterioration rate coefficient, post-treatment type, and standby unit operation method |
| Membrane filtration device 2 | Nanofiltration membrane and reverse osmosis membrane | Membrane type, element type (including membrane area), device configuration (number of elements, number of sequences, and the like), filtration flow flux, physical washing conditions (each time and flow rate of flushing or the like), type and amount of chemical for chemical washing added, immersion time, pre-and post-physical washing conditions and cycle, and pretreatment type (including chemical liquid injection specification, concentration, and the like), amount and water quality of supply water (including setting for each ion), amount and water quality of treated water, deterioration rate coefficient (related to supply pressure and water quality of treated water), recovery rate, post-treatment type, and standby unit operation method |
| Energy recovery device | Reverse pump type, water turbine type, pressure exchange type, and turbocharger | Device type, efficiency of energy recovery device, efficiency of auxiliary device (pump or the like), amount and pressure of supply water, amount and pressure of discharged water, amount and rate of leakage, and rotation speed |
| Chemical injection device | - | Amount and water quality of supply water (including temperature, pH, and details of each ion), amount and water quality of treated water (including temperature and pH), type and amount of chemical added, residence time, addition cycle, and stirring time (including strength) |
| Equipment | Pump, blower, and compressor | Equipment type, supply amount, pressure, and water quality (including specific gravity, or the like), discharge amount and pressure, and efficiency |
| | Tank | Supply amount, discharge amount, and residence time |
| Piping connection | Mixture and branch | Mixing amount and rate and branching amount and rate |

Further, when the user inputs the operating conditions, the initial values are automatically input in advance. This is because, when the user is unfamiliar with the water treatment unit processes of the unit icons, the initial values are input so that the user can easily input the conditions by referring to the initial values.

Further, it is more preferred that the water treatment process calculation method further includes a step of automatically calculating the initial values based on a preset fixed value or at least one of the water flow rate or the water quality of the input part and the output part of the unit icon in the water treatment process flow by an automatic calculation means 41.

In the unit icons wired in the input part and the output part of the water treatment process flow, the process calculation is performed as the water treatment unit in each of the icons. If the initial values of the target water treatment icons are automatically calculated based on the values of the water flow rate or the water quality in conjunction with the front and rear unit icons via the wiring from the calculation result, the user can reduce operating condition input items to be input and avoid an input error.

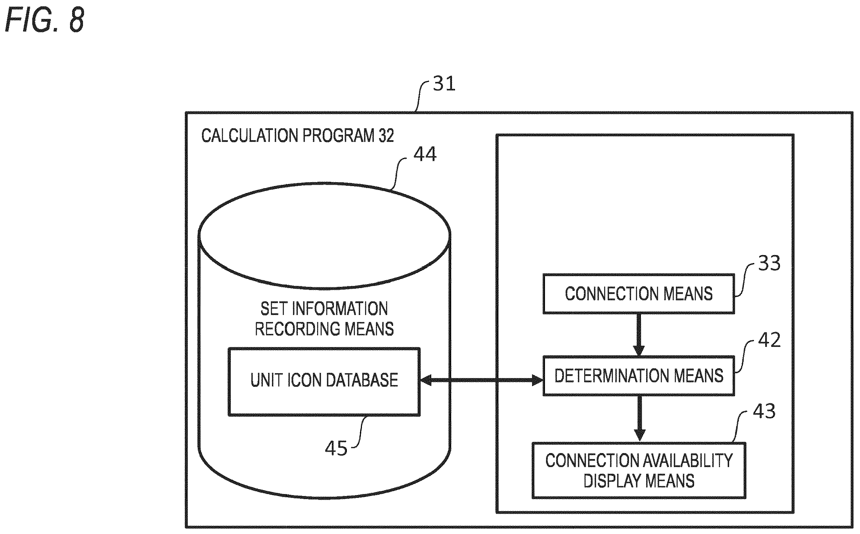

In a second embodiment of the present invention, a process calculation program 32 for a water treatment process causes the computer 31 to function as the inter-unit icon connection means 33 that connects an output part and an input part of unit icons after a plurality of unit icons are arranged on a screen and a determination means 42 that determines a connection restriction in order to design the water treatment process as illustrated in FIG. 8. In addition, the computer 31 is caused to function as a connection availability display means 43 which performs connection only when the connection is not restricted by the determination means 42 in the connection means 33. The requirements are defined from the viewpoint of easily creating the water treatment process flow capable of efficiently obtaining a desired amount of water or water quality by restricting a connection in which each water treatment unit icon does not function or the performances cannot be sufficiently exhibited, and the present invention is not limited to the following embodiment. Before the connection and the connection restriction of the unit icons of the water treatment unit processes are specifically described, the unit icons of the water treatment unit processes will be described below.

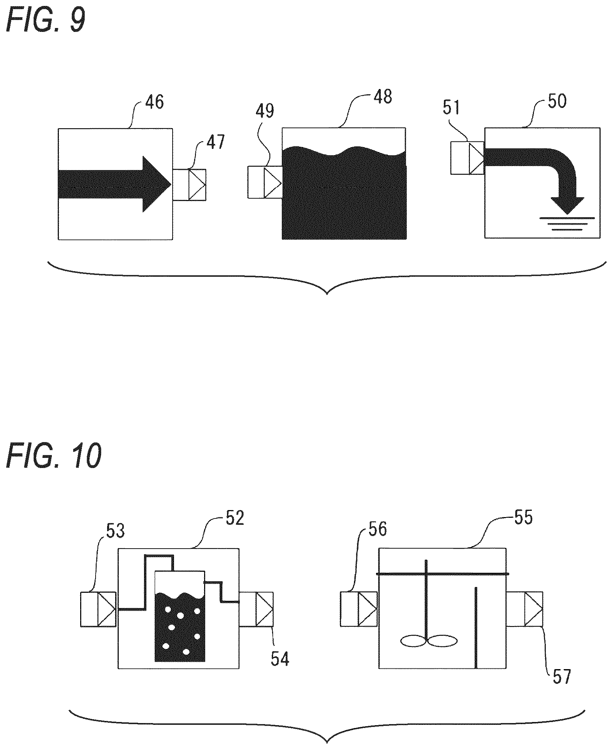

FIG. 9 illustrates an example of a unit icon A related to a water flow (raw water, product water, and wastewater). Raw water 46 has an output part 47, product water 48 has an input part 49, and wastewater water 50 has an input part 51. The output part 47 of the raw water 46 is a raw water supply port, and a pressure at the raw water supply port is about 0.01 MPa to 0.9 MPa.

FIG. 10 illustrates an example of a unit icon B related to the water treatment device (deaeration and coagulation treatment). Deaeration 52 includes an input part 53 and an output part 54, and a coagulation treatment 55 includes an input part 56 and an output part 57. The input part is a supply water inlet through which the water to be treated is supplied to the water treatment device, and the output part is a treated water outlet after the water to be treated is treated in the water treatment device. The water treatment device does not require a high pressure for the treatment of the water to be treated, and the supply water inlet and an outlet of the treated water in the water treatment device generally have a pressure of about 0.01 MPa to 0.9 MPa. Here, only the deaeration and the coagulation treatment are illustrated, the icons may be individually set for sedimentation separation, flotation separation, centrifugation, stirring treatment, aerobic treatment, anaerobic treatment, filtration, squeezing, filter cloth, accelerated oxidation, ion exchange, adsorption, absorption, crystallization, distillation, heat exchange, and mineral addition, and the input and output part may be set.

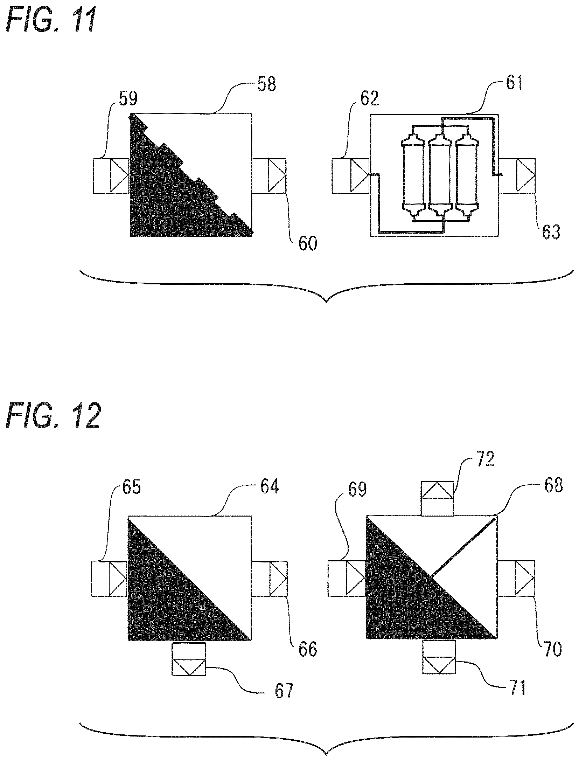

FIG. 11 illustrates an example of a unit icon C related to the membrane filtration device 1 (microfiltration membrane and ultrafiltration membrane). A microfiltration membrane 58 has an input part 59 and an output part 60, and an ultrafiltration membrane 61 has an input part 62 and an output part 63. For example, the input part 62 of the ultrafiltration membrane is an inlet of the water to be treated, and the output part 63 is a treated water outlet after the water to be treated is treated in the membrane filtration device 1. In the ultrafiltration membrane, the treated water is obtained by causing the water to be treated to pass through membrane pores, and thus the water to be treated needs a pressure added with pressure loss generated when the water to be treated passes through the membrane pores or pressure loss generated on a membrane secondary side or in a pipe after the water to be treated passes through the membrane pores in the case of the external pressure type. The membrane filtration device 1 does not require a high pressure for the treatment of the water to be treated as compared with the membrane filtration device 2, and the supply water inlet and the outlet of the water to be treated in the membrane filtration device 1 generally have a pressure of about 0.01 MPa to 0.9 MPa.

FIG. 12 illustrates an example of a unit icon D relating to the membrane filtration device 2 (nanofiltration membrane, reverse osmosis membrane, reverse osmosis membrane permeated water branch). A reverse osmosis membrane 64 has an input part 65, a first output part 66, and a second output part 67, and a reverse osmosis membrane permeated water branch 68 has an input part 69, a first output part 70, a second output part 71, and a third output part 72. For example, the input part 65 of the reverse osmosis membrane 64 is an inlet of the water to be treated, the first output part 66 is a treated water outlet after the water to be treated is permeation-treated by the reverse osmosis membrane, and the second output part 67 is a concentrated water outlet. A pressure at the inlet of the water to be treated in the membrane filtration device 2 also varies depending on the salt concentration of the raw water, and a supply pressure of the water to be treated is generally about 1 MPa to 15 MPa in order to obtain an effective osmotic pressure. In addition, a pressure of the second output part 67 affects a supply pressure only by pressure loss generated when the water to be treated passes through a primary side channel of the reverse osmosis membrane, and thus discharged at a pressure equivalent to the supply pressure. On the other hand, a pressure in the first output part 66 after the treatment is often significantly lower than the supply pressure. At this time, when the water to be treated is supplied to the reverse osmosis membrane in a state in which there is no supply pressure necessary for obtaining an effective osmotic pressure, the treated water cannot be obtained.

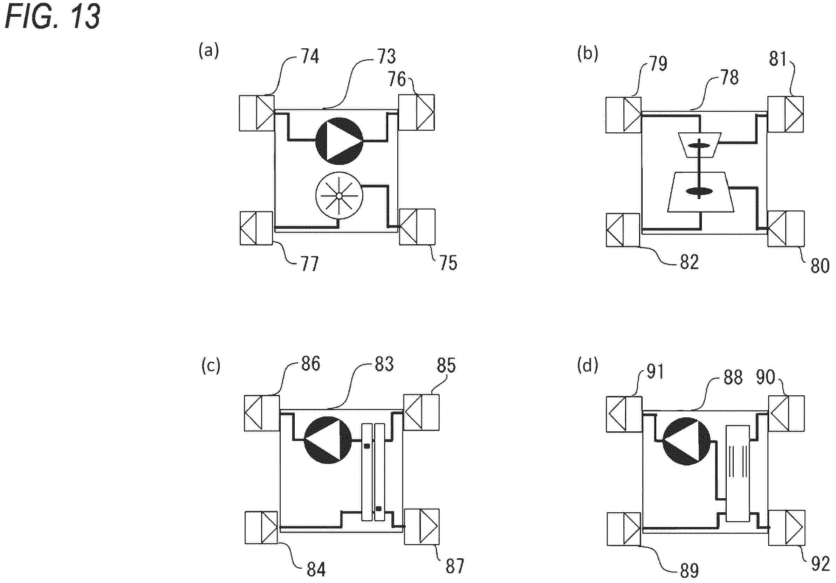

FIG. 13 illustrates an energy recovery device ERD, in which (a) of FIG. 13 illustrates an example of a water turbine type unit icon E, (b) of FIG. 13 illustrates an example of a turbocharger type unit icon E, (c) of FIG. 13 illustrates an example of a power exchange type unit icon E, and (d) of FIG. 13 illustrates an example of a pressure exchange type unit icon E. A water turbine type 73 has a first input part 74, a second input part 75, a first output part 76, and a second output part 77, a turbocharger type 78 has a first input part 79, a second input part 80, a first output part 81, and a second output part 82, a power exchange type 83 has a first input part 84, a second input part 85, a first output part 86, and a second output part 87, and a pressure exchange type 88 has a first input part 89, a second input part 90, a first output part 91, and a second output part 92. For example, the water turbine type 73 is a type that recovers energy by using a pressure as power, and recovers energy by utilizing the recovered power to operate the high pressure pump. At this time, power of high-pressure supply water supplied from the second input part 75 is recovered, the high pressure pump is operated by the recovered power, and supply water supplied from the first input part 74 is pressurized and discharged from the first output part 76. On the other hand, the water after the energy recovery is discharged from the second output part 77, and thus the pressure is low. At this time, when there is no predetermined pressure in the water supplied from the second input part 75, almost no energy is recovered and the recovery device does not function. The pressure exchange type 88 is a type that recovers energy as a pressure, and the pressure can be recovered by alternately supplying high-pressure supply water from the second input part 90 and low-pressure supply water from the first input part 89. At this time, pressurization is performed according to a pressure loss or the like in the energy recovery device by a booster pump in the pressure exchange type 88 and discharged from the first output part 91. On the other hand, the water after the energy recovery is discharged from the second output part 92, and thus the pressure is low. When there is no predetermined pressure in water to be supplied from the second input part 90 as in the case of the water turbine type, almost no energy is recovered, and the recovery device does not function, and thus in order for the energy recovery device to function properly, it is required to determine whether the connection is available after understanding the functions or characteristics of the front and rear water treatment unit icons.

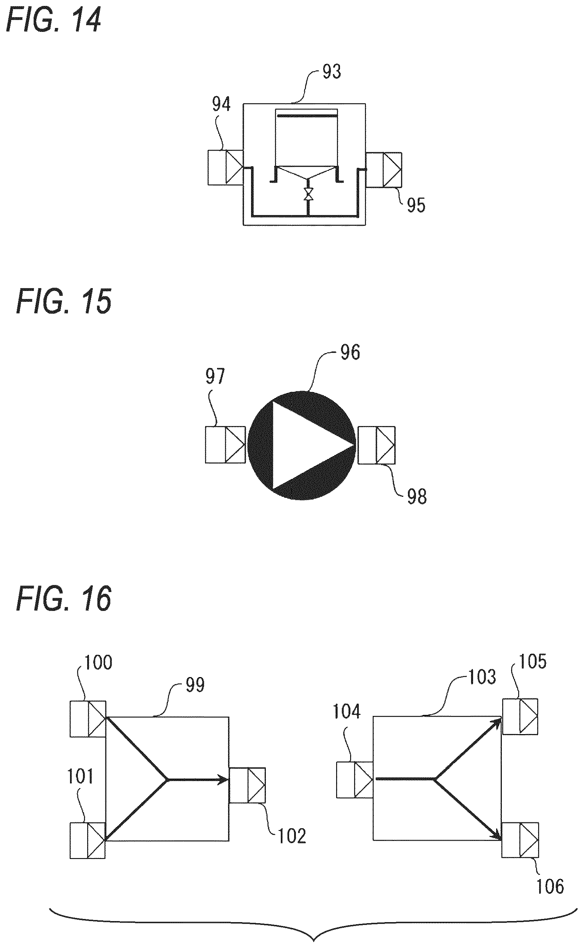

FIG. 14 illustrates an example of a unit icon F of the chemical liquid injection device. A chemical liquid injection device 93 includes an input part 94 and an output part 95. The input part 94 of the chemical liquid injection device 93 is an inlet of the water to be treated, and the output part 95 of the chemical liquid injection device 93 is a treated water outlet after a chemical liquid is injected by the chemical liquid injection device. The input part is a supply water inlet through which the water to be treated is supplied to the chemical liquid injection device, and the output part is a treated water outlet after the water to be treated is treated in the chemical liquid injection device. The chemical liquid injection device does not require a high pressure for the treatment of the water to be treated, and the supply water inlet and the outlet of the water to be treated in the water treatment device generally have a pressure of about 0.01 MPa to 0.9 MPa.

FIG. 15 is an example of a unit icon G of equipment (pump, blower, compressor). A pump 96 has an input part 97 and an output part 98. Although FIG. 15 illustrates only the pump 96, icons may be individually set for the blower and the compressor input and output part are set.

FIG. 16 is an example of a unit icon H of piping connection. A mixing 99 has a first input part 100, a second input part 101, and an output part 102, and a branch 103 has an input part 104, a first output part 105, and a second output part 106.

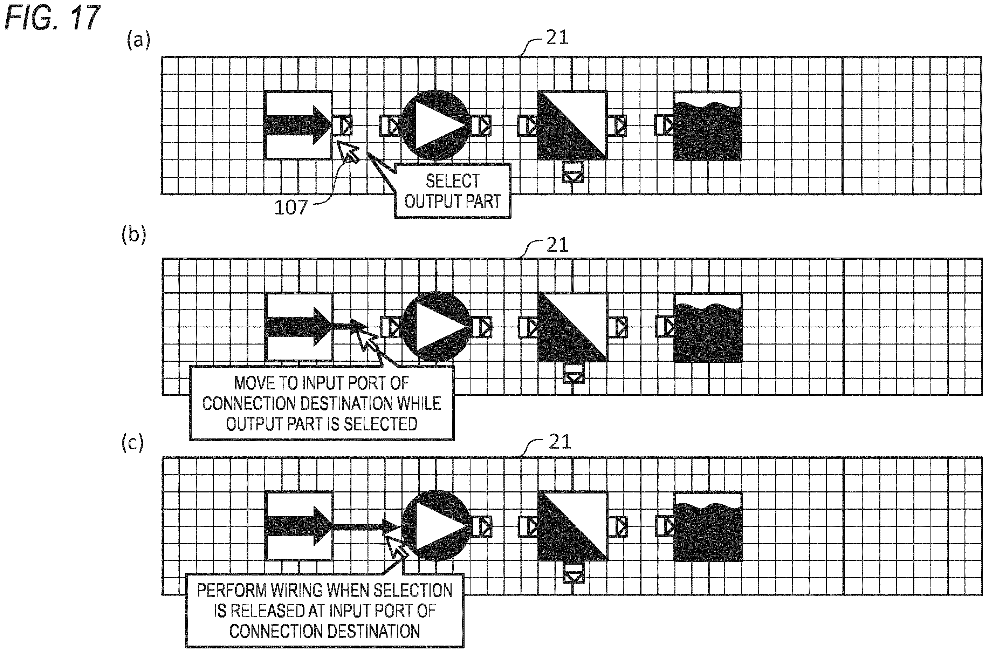

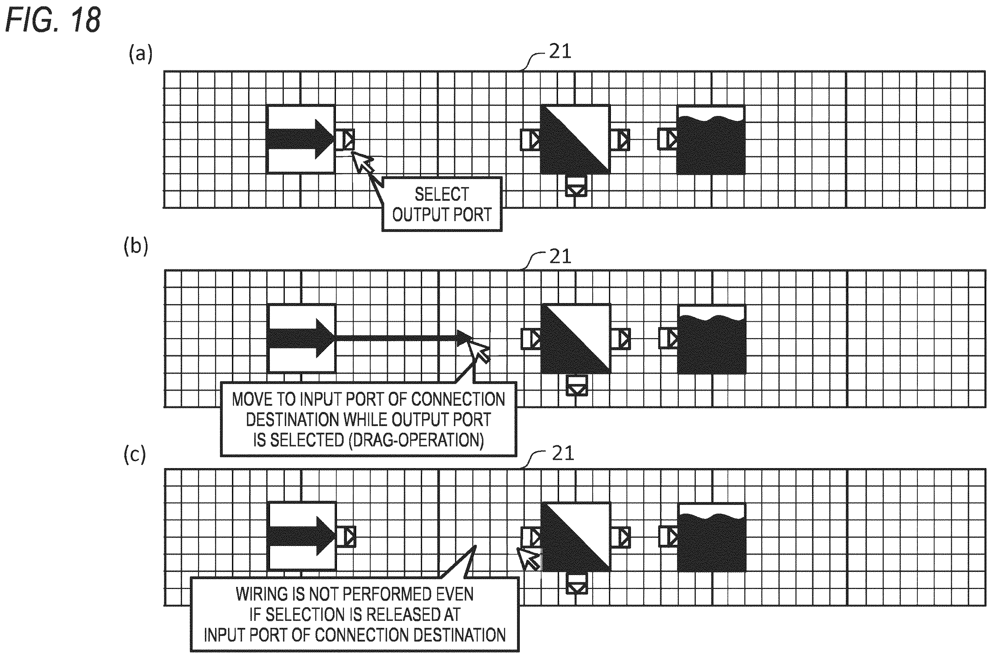

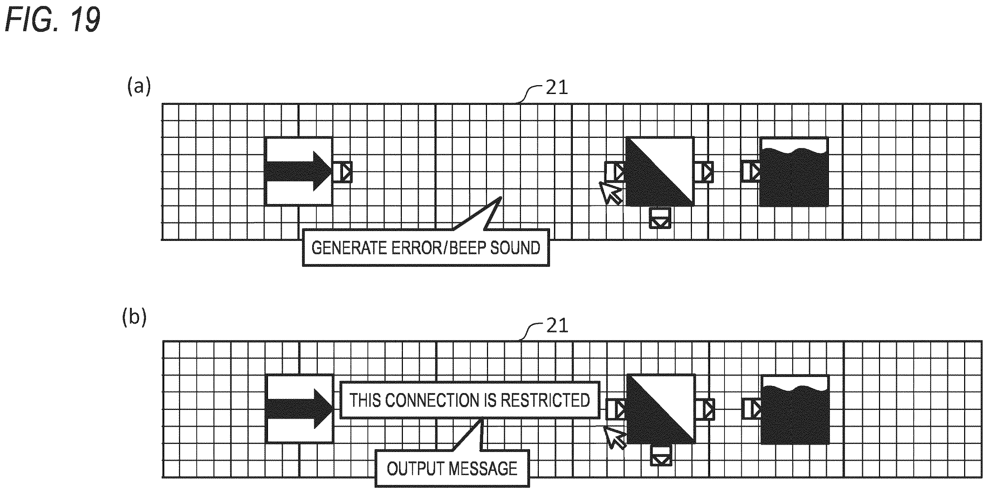

An example of the connection and the connection restriction of the unit icons of the water treatment unit processes will be described with reference to FIG. 17 and FIG. 18. After the plurality of unit icons are arranged on the main screen 21, an output part of one unit icon is selected by an operation means as illustrated in (a) of FIG. 17, and then moved to an input part of a connection destination while the output part of the unit icon is selected as illustrated in (b) of FIG. 17. Here, the operation means is, for example, a pointing device (mouse/pointer) 107 or a keyboard. Next, as illustrated in (c) of FIG. 17, only when the selection is released in the input part of the unit icon of the connection destination and it is determined in the determination means that no connection is restricted, a connection line indicating that the connection between the two unit icons is permitted is displayed by the connection availability display means. Similarly, as illustrated in (a) and (b) of FIG. 18, in a case in which it is determined in the determination means that a connection is restricted when the two unit icons are connected, the two unit icons are not connected and are not wired as illustrated in (c) of FIG. 18. In the case in which the connection is restricted, an error sound generator may be provided to generate an error and beep sound as illustrated in (a) of FIG. 19, or a message indicating that the connection is restricted may be output as illustrated in (b) of FIG. 19.

As illustrated in FIG. 18, when the connection restriction is determined, the connection restriction may be determined based on a unit icon database 45 stored in a set information recording means 44. The unit icon database 45 is a database including identification information or information indicating characteristics or the like for each input and output part of the water treatment unit icon as shown in Tables 2 and 3. Table 2 shows identification information related to the water treatment unit icons A, B, C, and D or information indicating characteristics or the like, and Table 3 shows identification information related to the water treatment unit icons E, F, G, and H or information indicating characteristics or the like.

**Table 2**

| Water treatment unit icons | Name of input and output ports | Identification information | Equation representing characteristics | Allowable range of parameter | Connection allowable range |
|---|---|---|---|---|---|
| A water flow | Raw water output port 22 | O22-1 | YO22 = f(xO22) | **x1O22 ≤ xO22 ≤** x2O22 | **y1O22 ≤ yO22 ≤** y2O22 |
| | Product water input port 25 | I25-1 | YI25 = f(xI25) | **x1I25 ≤ xI25 ≤** x2I25 | **y1I25 ≤ yI25 ≤** y2I25 |
| | Wastewater input port 27 | I27-1 | YI27 = f(xI27) | **x1I27 ≤ xI27 ≤** x2I27 | **y1I27 ≤ yI27 ≤** y2I27 |
| B water treatment device | Deaeration input port 29 | I29-1 | YI29 = f(xI29) | **x1I29 ≤ xI29 ≤** x2I29 | **y1I29 ≤ yI29 ≤** y2I29 |
| | Deaeration output port 30 | O30-1 | YO30 = f(xO30) | **x1O30 ≤ xO30 ≤** x2O30 | **y1O30 ≤ yO30 ≤** y2O30 |
| | Coagulation input port 32 | I32-1 | YI32 = f(xI32) | **x1I32 ≤ xI32 ≤** x2I32 | **y1I32 ≤ yI32 ≤** v2I32 |
| | Coagulation output port 33 | O33-1 | YO33 = f(xO33) | **x1O33 ≤ xO33 ≤ x2O33** | **y1O33 ≤ yO33 ≤** v2O33 |
| C membrane filtration device 1 | Microfiltration membrane input port 35 | I35-1 | YI35 = f(xI35) | **x1I35 ≤ xI35 ≤** x2I35 | **y1I35 ≤ yI35 ≤** v2I35 |
| | Microfiltration membrane output port 36 | O36-1 | YO36 = f(xO36) | **x1O36 ≤ xO36 ≤** x2O36 | **y1O36 ≤ yO36 ≤ y2O36** |
| | Ultrafiltration membrane input port 38 | I38-1 | YI38 = f(xI38) | **x1I38 ≤ xI38 ≤** x2I38 | **y1I38 ≤ yI38 ≤** v2I38 |
| | Ultrafiltration membrane output port 39 | O39-1 | YO39 = f(xO39) | **x1O39 ≤ xO39 ≤** x2O39 | **y1O39 ≤ yO39 ≤** y2O39 |
| D membrane filtration device 2 | Reverse osmosis membrane input port 41 | I41-1 | YI41 = f(xI41) | **x1I41 ≤ xI41 ≤** x2I41 | **y1I41 ≤ yI41 ≤** v2I41 |
| | Reverse osmosis membrane first output port 42 | O42-1 | YO42 = f(xO42) | **x1O42 ≤ xO42 ≤** x2O42 | **y1O42 ≤ yO42 ≤** y2O42 |
| | Reverse osmosis membrane second output port 43 | O43-2 | YO43 = f(xO43) | **x1O43 ≤ xO43 ≤** x2O43 | **y1043 ≤ yO43 ≤** y2O43 |
| | Reverse osmosis membrane permeate branch input port 45 | I45-1 | YI45 = f(xI45) | **x1I45 ≤ xI45 ≤** x2I45 | **y1I45 ≤ yI45 ≤** y2I45 |
| | Reverse osmosis membrane permeate branch first output port 46 | O46-1 | YO46 = f(xO46) | **x1O46 ≤ xO46 ≤** x2O46 | **y1O46 ≤ yO46 ≤** y2O46 |
| | Reverse osmosis membrane permeate branch second output port 47 | O47-2 | YO47 = f(xO47) | **x1O47 ≤ xO47 ≤** x2O47 | **y1O47 ≤ yO47 ≤** y2O47 |
| | Reverse osmosis membrane permeate branch third output port 48 | O48-1 | YO48 = f(xO48) | **x1O48 ≤ xO48 ≤** x2O48 | **y1O48 ≤ yO48 ≤** y2O48 |

**Table 3**

| Water treatment unit icons | Name of input and output ports | Identification information | Equation representing characteristics | Allowable range of parameter | Connection allowable range |
|---|---|---|---|---|---|
| | Energy recovery (water turbine type) first input port 50 | I50-1 | YI50 = f(xI50) | **x1I50** ≤ **xI50** ≤ x2I50 | **y1I50** ≤ **yI50** ≤ v2I50 |
| | Energy recovery (water turbine type) second input port 51 | I51-2 | YI51 = f(xI51) | **x1I51** ≤ **xI51** ≤ x2I51 | **y1I51** ≤ **yI51** ≤ v2I51 |
| | Energy recovery (water turbine type) first output port 52 | O52-1 | YO52 = f(xO52) | **x1O52** ≤ **xO52** ≤ x2O52 | **y1O52 ≤ yO52** ≤ y2O52 |
| | Energy recovery (water turbine type) second output port 53 | O53-2 | YO53 = f(xO53) | **x1O53 ≤ xO53** ≤ x2O53 | **y1O53 ≤ yO53** ≤ Y2O53 |
| | Energy recovery (turbocharger) first input port 55 | I55-1 | YI55 = f(xI55) | **x1I55** ≤ **xI55** ≤ x2I55 | **y1I55** ≤ **yI55** ≤ y2I55 |
| E energy recovery (ERD) | Energy recovery (turbocharger) second input port 56 | I56-2 | YI56 = f(xI56) | **x1I56** ≤ **xI56** ≤ x2I56 | **y1I56** ≤ **yI56** ≤ v2I56 |
| | Energy recovery (turbocharger) first output port 57 | O57-1 | YO57 = f(xO57) | **x1O57** ≤ **xO57** ≤ x2O57 | **y1O57** ≤ **yO57** ≤ y2O57 |
| | Energy recovery (turbocharger) second output port 58 | O58-2 | YO58 = f(xO58) | **x1O58** ≤ **xOS8** ≤ x2O58 | **y1O58** ≤ **yO58** ≤ y2O58 |
| | Energy recovery (power exchange type) first input port 60 | I60-1 | YI60 = f(xI60) | **x1I60** ≤ **xI60** ≤ x2I60 | **y1I60** ≤ **yI60** ≤ v2I60 |
| | Energy recovery (power exchange type) second input port 61 | I61-2 | YI61 = f(xI61) | **x1I61** ≤ **xI61** ≤ x2I61 | **y1I61** ≤ **yI61** ≤ y2I61 |
| | Energy recovery (power exchange type) first output port 62 | O62-1 | YO62 = f(xO62) | **x1062 ≤ xO62** ≤ x2O62 | **y1O62** ≤ **yO62** ≤ y2O62 |
| | Energy recovery (power exchange type) second output port 63 | O63-2 | YO63 = f(xO63) | **x1063** ≤ **xO63** ≤ x2O63 | **y1063** ≤ **yO63** ≤ y2O63 |
| | Energy recovery (pressure exchange type) first input port 65 | I65-1 | YI65 = f(xI65) | **x1I65** ≤ **xI65** ≤ x2I65 | **y1I65** ≤ **yI65** ≤ v2I65 |
| | Energy recovery (pressure exchange type) second input port 66 | I66-2 | YI66 = f(xI66) | **x1I66** ≤ **xI66** ≤ x2I66 | **y1I66** ≤ **yI66** ≤ y2I66 |
| | Energy recovery (pressure exchange type) first output port 67 | O67-1 | YO67 = f(xO67) | **x1O67** ≤ **xO67** ≤ x2O67 | **y1O67** ≤ **yO67** ≤ y2O67 |
| | Energy recovery (pressure exchange type) second output port 68 | O68-2 | YO68 = f(xO68) | **x1O68** ≤ **xO68** ≤ x2O68 | **y1O68** ≤ **yO68** ≤ y2O68 |

**Table 3 (continued)**

| Water treatment unit icons | Name of input and output ports | Identification information | Equation representing characteristics | Allowable range of parameter | Connection allowable range |
|---|---|---|---|---|---|
| F chemical liquid injection device | Chemical liquid injection device input port 70 | I70-1 | YI70 = f(xI70) | **x1170 ≤ xI70** ≤ x2I70 | **y1I70** ≤ **yI70** ≤ y2I70 |
| G equipment | Chemical liquid injection device output port 71 | O71-1 | YO71 = f(xO71) | **x1O71 ≤ xO71** ≤ x2O71 | **y1O71** ≤ **yO71** ≤ y2O71 |
| | Pump input port 73 | I73-1 | YI73 = f(xI73) | **x1173 ≤ xI73** ≤ x2I73 | **y1I73** ≤ **yI73** ≤ y2I73 |
| | Pump output port 74 | O74-1 | YO74 = f(xO74) | **x1O74 ≤ xO74** ≤ x2O74 | **y1O74** ≤ **yO74** ≤ y2O74 |
| H piping connection | Branch first input port 76 | I76-1 | YI76 = f(xI76) | **x1I76** ≤ **xI76** ≤ x2I76 | **y1I76** ≤ **yI76** ≤ y2I76 |
| | Branch second input port 77 | I77-2 | YI77 = f(xI77) | **x1I77 ≤ xI77 ≤** x2I77 | **y1I77** ≤ yI77 ≤ y2I77 |
| | Branch output port 78 | O78-1 | YO78 = f(xO78) | **x1O78 ≤ xO78** ≤ x2O78 | **y1O78** ≤ **yO78** ≤ y2O78 |
| | Mixing input port 80 | I80-1 | YI80 = f(xI80) | **x1I80** ≤ **xI80** ≤ x2I80 | **y1I80** ≤ **yI80** ≤ y2I80 |
| | Mixing first output port 81 | O81-1 | YO81 = f(xO81) | **x1O81 ≤ xO81** ≤ x2O81 | **y1O81** ≤ **yO81** ≤ y2O81 |
| | Mixing second output port 82 | O82-2 | YO82 = f(xO82) | **x1O82 ≤ xO82** ≤ x2O82 | **y1O82 ≤ yO82** ≤ y2O82 |

The unit icon database 45 stores, for example, identification information 074-1 on an outlet of the pump shown in Table 3, a set value YO74 = f(xO74) calculated based on an equation indicating the characteristics of the outlet of the pump, an allowable range x1O74 ≤ xO74 ≤ x2O74 of parameters included in the equation, and a connection allowable range y1O74 ≤ yO74 ≤ y2O74. The characteristics are freely set, such as a pressure, a flow rate, a recovery rate, and water quality, and one or more characteristics may be set. Here, examples of the water quality include a concentration, a temperature, and a turbidity of an evaporation residue, an organic substance concentration, an inorganic substance concentration, pH, an electrical conductivity, and SDI. As for the connection restriction, the connection is permitted when the characteristics of the input and output to be connected fall within the connection allowable range, and the connection is restricted when the characteristics are out of the connection allowable range. The information stored in the unit icon database 45 may be calculated and updated as needed for each connection between the unit icons based on the set information before and after the connection, or may be set as a fixed value. In addition, the unit icon database 45 may store connection availability information for each input and output part of the water treatment unit icon as shown in Tables 4 and 5, and the connection may be restricted based on Tables 4 and 5.

Table 4 shows information indicating the connection restriction related to the water treatment unit icons A, B, C, and D, and Table 5 shows information indicating the connection restriction related to the water treatment unit icons E, F, G, and H. In Tables 4 and 5, "∘" indicates "connectable" and "x" indicates "unconnectable".

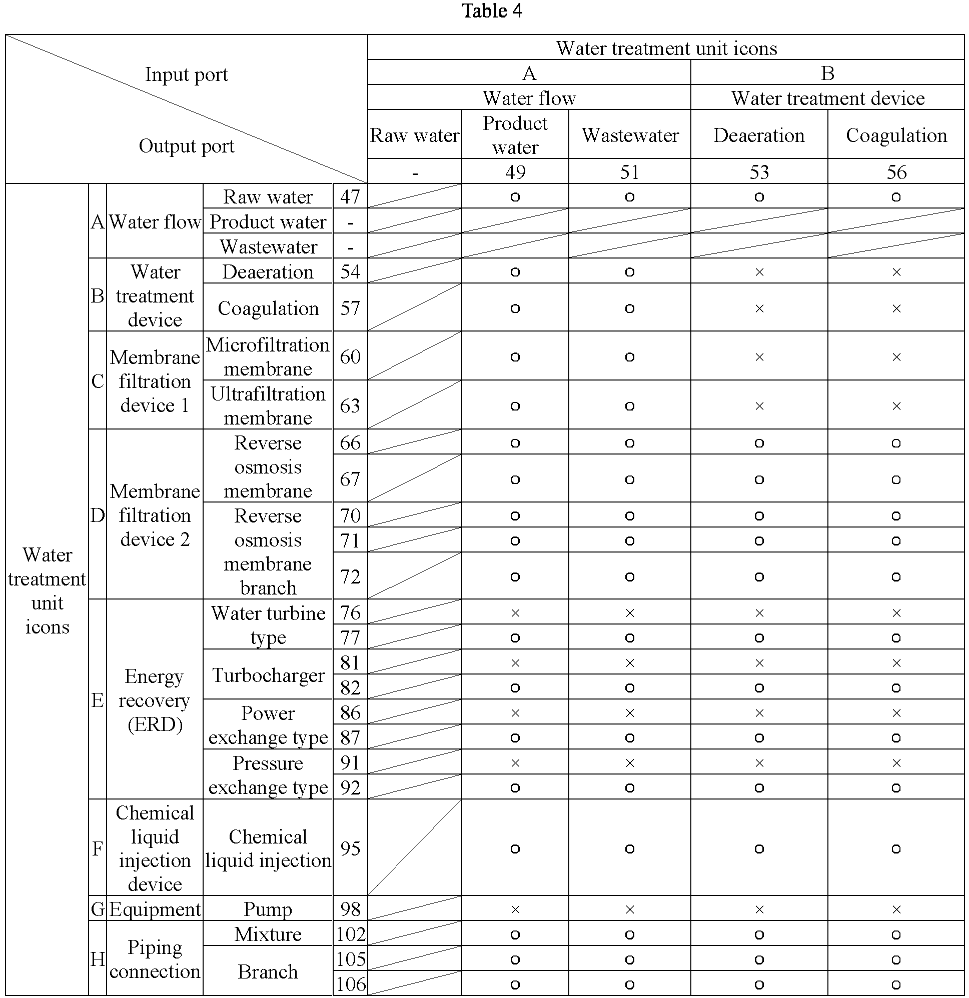

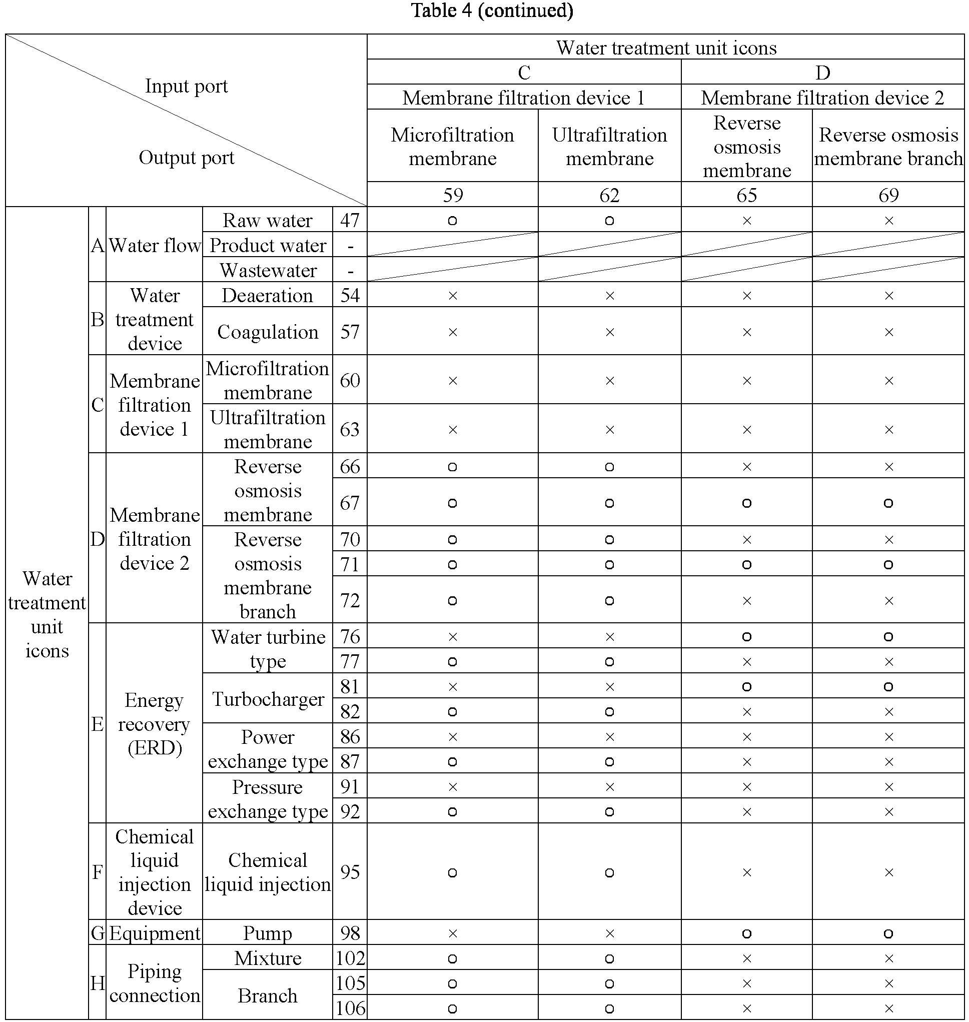

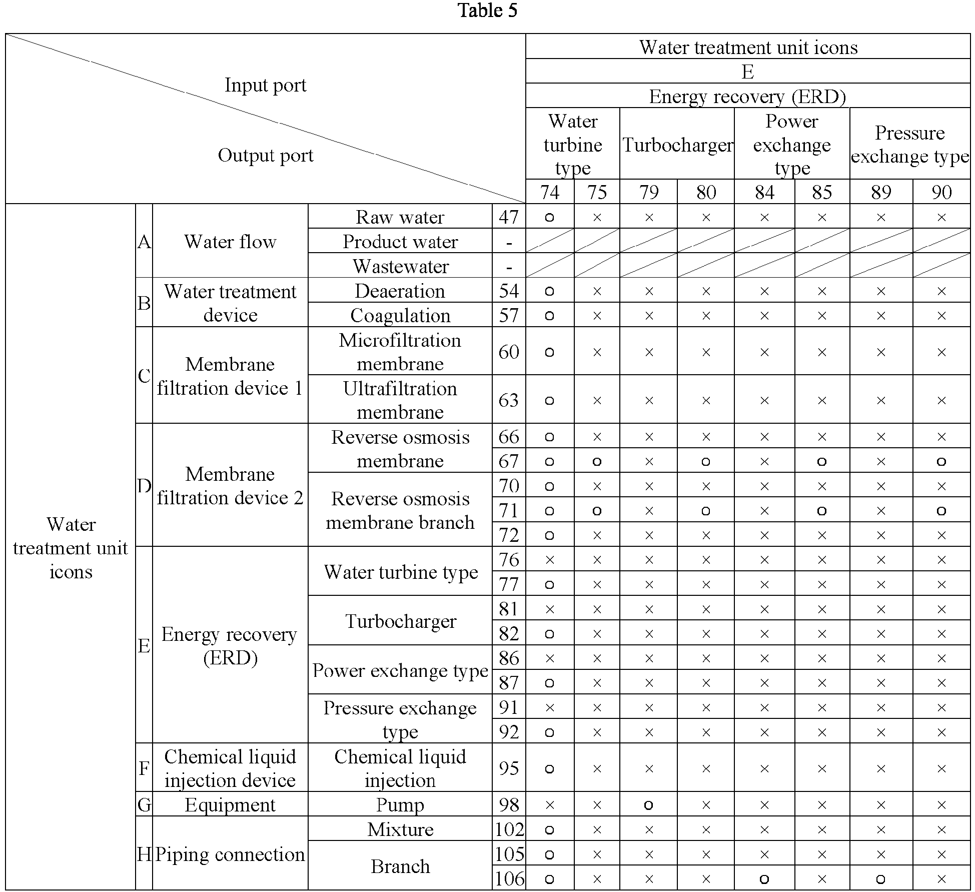

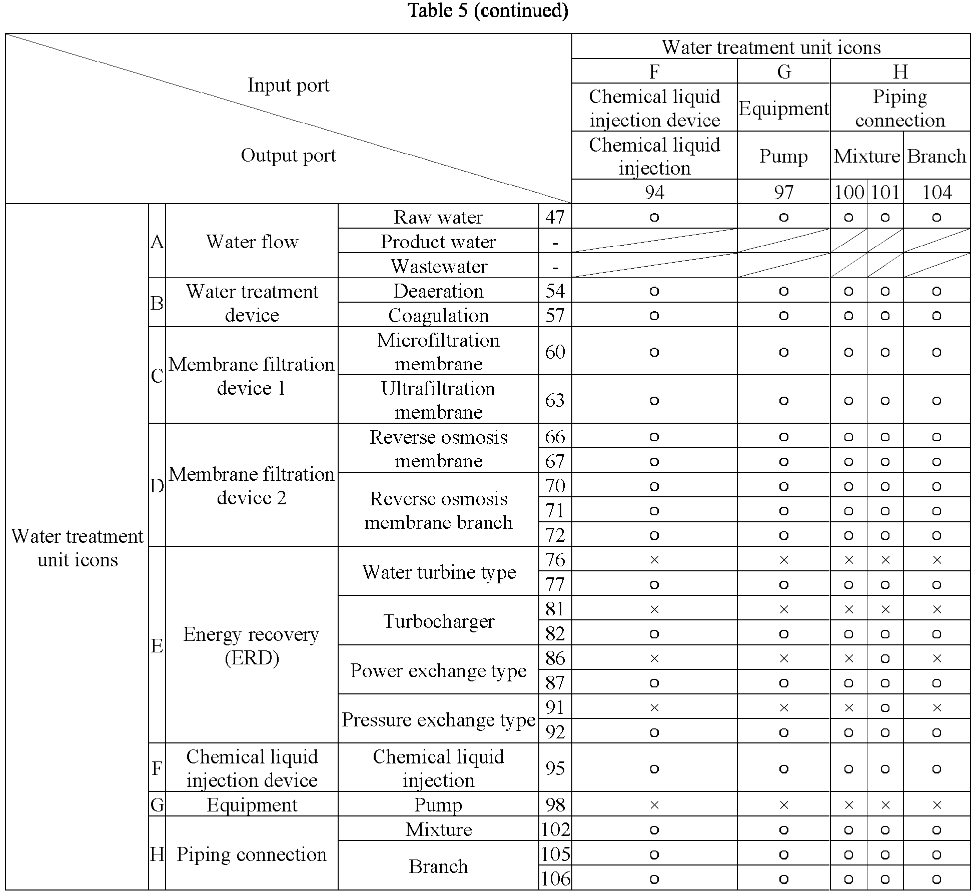

Although there is a high degree of freedom in freely arranging icons on a screen, setting a channel by an icon movement operation, and executing a simulation, there is a problem in that a function of each icon is not sufficiently exhibited depending on a combination of channel connections, and desired water quality or a treatment amount cannot be obtained. For example, in the case of obtaining the desired water quality or the treatment amount in the membrane filtration device using the reverse osmosis membrane, it is necessary to feed the raw water at a pressure equal to or higher than an osmotic pressure, and if a permeation port of the membrane filtration device using the reverse osmosis membrane or a wastewater port after energy discharge of the energy recovery device is connected, a pressure necessary for the membrane filtration device using the reverse osmosis membrane cannot be obtained, the desired water quality or the treatment amount cannot be obtained even if a simulation calculation is repeated, and a large time is required until a desired treatment amount or treatment water quality are obtained, but it is possible to easily create the water treatment process flow capable of efficiently obtaining the desired water amount or the water quality by restricting a connection in which each water treatment unit icon does not function or the performance cannot be sufficiently exhibited. Examples of the classification of the connection restriction include a classification related to low pressure and high pressure connections in which the backflow or the performances of the water treatment unit icon cannot be sufficiently exhibited, a classification related to a connection for causing the energy recovery device serving as a water treatment unit and playing an important role in the process flow to function, and a classification related to a meaningless continuous arrangement such as a connection of a branch and a merge which are water treatment unit icons indicating water flows, and the connection may be restricted based on these classifications. In addition, the unit icon group may be assembled based on a predefined restriction and arranged on the main screen all at once. Here, the predetermined restriction may be defined by the identification information or the information indicating characteristics or the like as shown in Tables 2 and 3, or may be defined based on the connection availability information for each input and output part of the water treatment unit icon as shown in Tables 4 and 5.

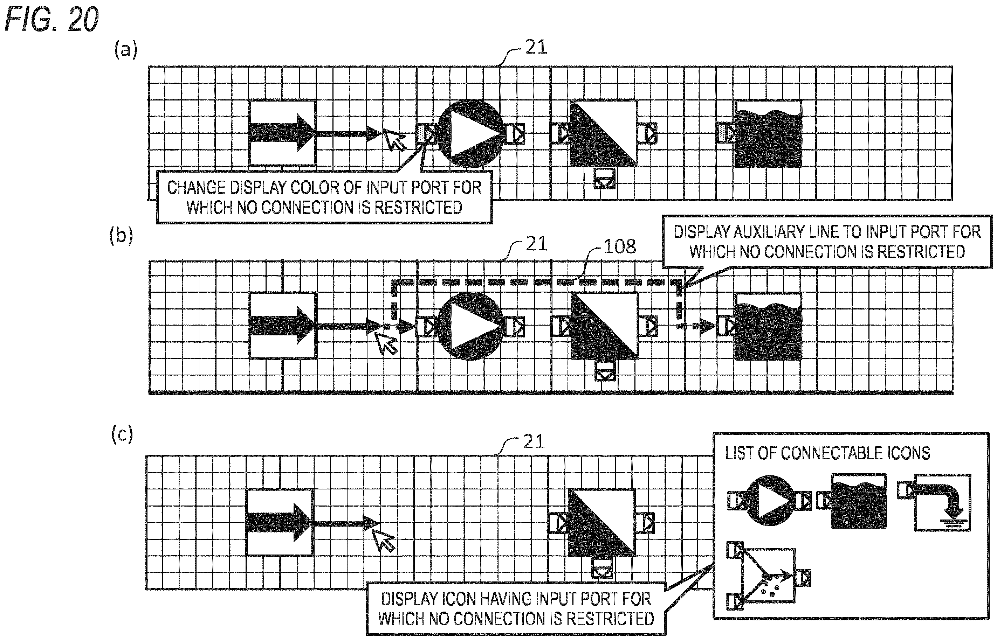

Further, in order to facilitate the creation of the water treatment process flow, as illustrated in FIG. 20, the input and output part of the unit icon for which no connection is restricted may be displayed on the screen so as to be visually distinguished. The above term "visually" means that a display color of the input and output part for which no connection is restricted is changed as illustrated in (a) of FIG. 20, an auxiliary line 108 to an input and output part for which no connection is restricted is displayed as illustrated in (b) of FIG. 20, and a list of connectable unit icons is displayed when there is no input and output part for which no connection is restricted on the screen as illustrated in (c) of FIG. 20. It is preferred that the connection availability display means has functions for changing a display color, displaying an auxiliary line, and displaying connectable unit icons, and the water treatment process flow can be more easily obtained by performing the display.

The water treatment process flow can be efficiently and easily created by appropriately combining the first and second embodiments.

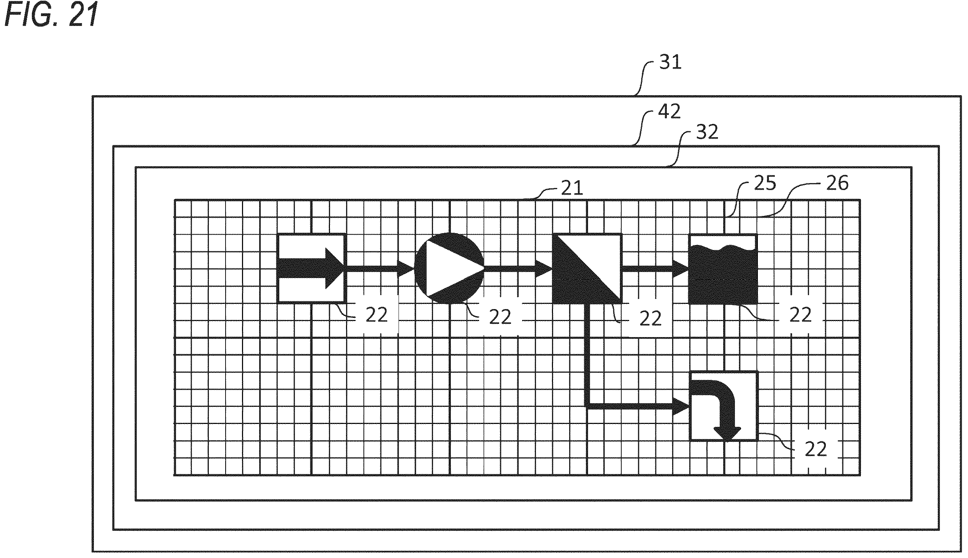

As illustrated in FIG. 21, a third embodiment of the present invention is characterized in that a water treatment process calculation method is stored as a computer-readable program on a computer-readable recording medium on which the program is recorded. In this case, the water treatment process calculation program 32 is stored in a recording medium 109 such as a hard disk of the computer.

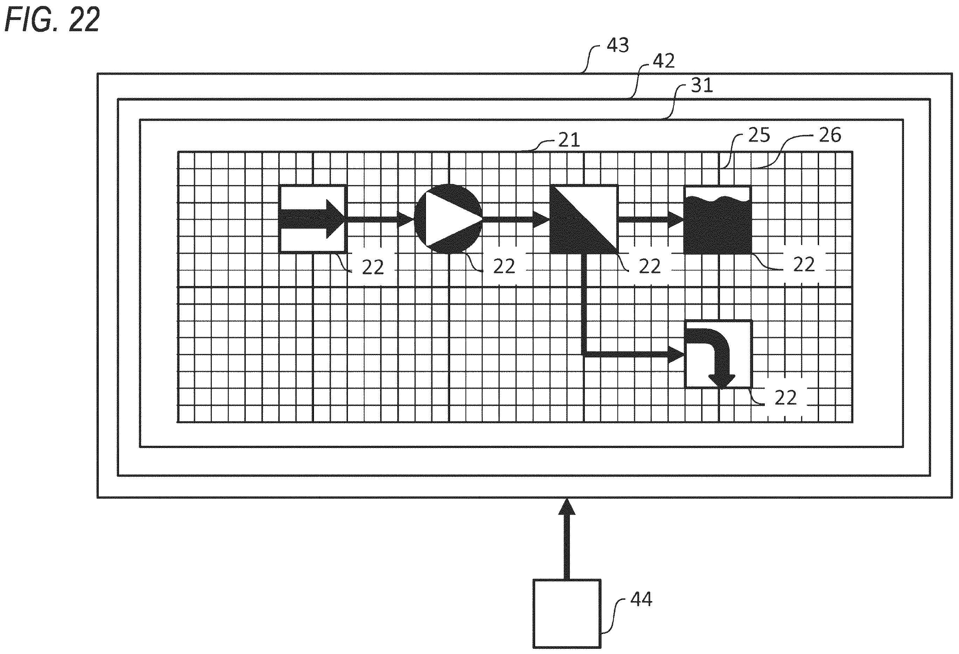

A system for storing a recording medium may be an on-premise server or a cloud server as illustrated in FIG. 22. As described above, in a case in which the water treatment process calculation program is stored in the server, it is more preferred that the system accesses the program via the browser on the computer and executes the water treatment process calculation program 32 to execute a calculation.

Although various embodiments have been described above with reference to the drawings, the present invention is not limited to these examples. It is apparent to those skilled in the art that various variations or modifications can be conceived within the scope described in the claims, and it should be naturally understood that those belong to the technical scope of the present invention. In addition, the components described in the above embodiments may be combined freely without departing from the spirit of the invention.

The present application is based on the Japanese patent application (Japanese Patent Application No. 2022-121168) filed on July 29, 2022, the Japanese patent application (Japanese Patent Application No. 2022-121169) filed on July 29, 2022, and the Japanese patent application (Japanese Patent Application No. 2023-024858) filed on February 21, 2023, contents of which are incorporated in the present application by reference.

### REFERENCE SIGNS LIST

1: raw water
2: ultrafiltration membrane
3: reverse osmosis membrane
4: product water
5: raw water pump
6: filtrate-water branch
7: air washing blower
8: supply pump
9: high pressure pump
10: chemical injection device
11: energy recovery device
12: branch
13: junction
14: backwash pump
15: air washing blower
16: backwash pump
17: air washing blower
21: main screen
22: unit icon
23: icon input part
24: icon output part
25: main grid line
26: sub-grid line
27: ultrafiltration membrane (pressurized type) unit icon group
28: energy recovery device (pressure exchange type) unit icon group
31: computer
32: water treatment process calculation program
33: inter-unit icon connection means
34: inter-unit icon wiring maintaining means
35: inter-unit icon calculation result transfer means
36: inter-unit icon arrangement interval automatic adjustment means
37: unit icon group arrangement means
38: data input mode switching means
39: water treatment process calculation means
40: operating condition screen display means
41: automatic calculation means
42: determination means
43: connection availability display means
44: set information recording means
45: unit icon database
46: raw water
47: raw water output part
48: product water
49: product water input part
50: wastewater
51: wastewater input part
52: deaeration
53: deaeration input part
54: deaeration output part
55: coagulation treatment
56: coagulation input part
57: coagulation output part
58: microfiltration membrane
59: microfiltration membrane input part
60: microfiltration membrane output part
61: ultrafiltration membrane
62: ultrafiltration Membrane input part
63: ultrafiltration membrane output part
64: reverse osmosis membrane
65: reverse osmosis membrane input part
66: reverse osmosis membrane first output part
67: reverse osmosis membrane second output part
68: reverse osmosis membrane permeated water branch
69: reverse osmosis membrane permeated water branch input part
70: reverse osmosis membrane permeated water branch first output part
71: reverse osmosis membrane permeated water branch second output part
72: reverse osmosis membrane permeated water branch third output part
73: energy recovery (water turbine type)
74: energy recovery (water turbine type) first input part
75: energy recovery (water turbine type) second input part
76: energy recovery (water turbine type) first output part
77: energy recovery (water turbine type) second output part
78: energy recovery (turbocharger)
79: energy recovery (turbocharger) first input part
80: energy recovery (turbocharger) second input part
81: energy recovery (turbocharger) first output part
82: energy recovery (turbocharger) second output part
83: energy recovery (power exchange type)
84: energy recovery (power exchange type) first input part
85: energy recovery (power exchange type) second input part
86: energy recovery (power exchange type) first output part
87: energy recovery (power exchange type) second output part
88: energy recovery (pressure exchange type)
89: energy recovery (pressure exchange type) first input part
90: energy recovery (pressure exchange type) second input part
91: energy recovery (pressure exchange type) first output part
92: energy recovery (pressure exchange type) second output part
93: chemical liquid injection device
94: input part
95: output part
96: pump
97: input part
98: output part
99: mixing
100: first input part
101: second input part
102: output part
103: branch
104: input part
105: first output part
106: second output part
107: mouse/pointer
108: auxiliary line
109: recording medium
110: server

## Claims

1. A water treatment process calculation method, which is a process calculation method for a water treatment process operated on a computer, having:
a main screen configured to arrange a water treatment process flow; and
a plurality of unit icons for water treatment unit processes each having at least one of an input part and an output part, the method comprising:
a step in which an inter-unit icon connection means performs wiring between two unit icons by arranging the plurality of unit icons on the main screen, selecting an output part of one unit icon and releasing the selection at an input part of another unit icon;
a step in which an inter-unit icon wiring maintaining means maintains the wiring so as not to break even if an arrangement of the unit icons is changed after the wiring is performed; and
a step in which an inter-unit icon calculation result transfer means takes over a calculation result from the output part of the one unit icon to the input part of the other unit icon.

2. The water treatment process calculation method according to claim 1, having:
a determination means determining whether a connection is restricted in the connection means; and
a set information recording means recording set information on the output part or the input part for each of the unit icons, wherein
the determination means compares the set information on the output part with the set information on the input part of the unit icons to be connected by the connection means, and restricts the connection by the determination means when the set information is out of a range of a set value.

3. The water treatment process calculation method according to claim 2, wherein
the set information recorded in the set information recording means is a set value or a set range of a pressure.

4. The water treatment process calculation method according to claim 2 or 3, wherein
the set information recorded in the set information recording means is a set value or a set range of at least one of a pressure, a flow rate, a temperature, and a water quality.

5. The water treatment process calculation method according to any one of claims 1 to 4, further comprising:
a step in which an inter-unit icon arrangement interval automatic adjustment means automatically adjusts an arrangement interval between the unit icons of the water treatment processes in consideration of the wiring between the unit icons when the plurality of unit icons are arranged on the main screen.

6. The water treatment process calculation method according to any one of claims 1 to 5, wherein
the unit icon is at least one of the following A to H:
A. a water flow (raw water, product water, and wastewater);
B. a water treatment device (sedimentation separation, flotation separation, centrifugation, coagulation treatment, stirring treatment, aerobic treatment, anaerobic treatment, accelerated oxidation, ion exchange, adsorption, absorption, deaeration, crystallization, distillation, heat exchange, and mineral addition);
C. a membrane filtration device 1 (filter cloth, microfiltration membrane, and ultrafiltration membrane);
D. a membrane filtration device 2 (nanofiltration membrane and reverse osmosis membrane);
E. an energy recovery device (reverse pump type, water turbine type, pressure exchange type, and turbocharger);
F. a chemical liquid injection device;
G. devices (pump, blower, and compressor); and
H. piping connection (mixing and branch).

7. The water treatment process calculation method according to any one of claims 1 to 6, further comprising:
a step in which an arrangement of all or a part of the unit icons is predefined, and a unit icon group arrangement means arranges the unit icons as a unit icon group on the main screen all at once.

8. The water treatment process calculation method according to claim 7, wherein
a target unit icon of the unit icon group arrangement means is an ultrafiltration membrane, a microfiltration membrane, or an energy recovery device.

9. The water treatment process calculation method according to any one of claims 1 to 8, wherein
when the unit icon is selected, a connectable unit icon is displayed on the screen so as to be visually distinguished.

10. The water treatment process calculation method according to claim 9, wherein
a means for displaying the unit icon on the screen so as to be visually distinguished changes display colors of the input part and the output part for which no connection is restricted.

11. The water treatment process calculation method according to claim 9, wherein
a means for displaying the unit icon on the screen so as to be visually distinguished changes a auxiliary line to the input part and the output part for which no connection is restricted.

12. The water treatment process calculation method according to claim 2, wherein
when a connection that is a restricted connection recorded in the set information recording means occurs between the output part and the input part of the unit icons in the connection means, the output part of the unit icon and the unit icon for which no connection is restricted in the determination means are displayed on a connection restriction information display means.

13. The water treatment process calculation method according to any one of claims 1 to 12, further comprising:
a step in which a data input mode switching means switches the main screen of the water treatment process flow to a data input mode after the plurality of unit icons are arranged on the main screen, and the wiring between the unit icons is performed; and
a step in which a water treatment process calculation means executes a process calculation after a target unit icon is selected and an operating condition value is set.

14. The water treatment process calculation method according to any one of claims 1 to 13, further comprising:
a step of in which an operating condition screen display means displays an operating condition screen after an operating condition value of the unit icon automatically set according to a type of the icon is input as an initial value.

15. The water treatment process calculation method according to claim 14, further comprising:
a step in which an automatic calculation means automatically calculates the initial value based on a fixed value or at least one of a water flow rate and a water quality of the input part and the output part.

16. A water treatment process calculation program to perform process calculation of a water treatment process, causing a computer to function as:
a water treatment process flow display means configured to display a water treatment process flow on a main screen;
a unit icon input and output means for a water treatment unit process including at least one of an input part and an output part;
an inter-unit icon connection means configured to perform wiring between two unit icons by arranging a plurality of unit icons on the main screen, selecting an output part of one unit icon and release the selection at an input part of another unit icon;
an inter-unit icon wiring maintaining means configured to maintain the wiring so as not to break even if an arrangement of the unit icons is changed after the wiring is performed; and
an inter-unit icon calculation result transfer means configured to take over a calculation result from the output part of the one unit icon to the input part of the other unit icon.

17. The water treatment process calculation program according to claim 16, further causing the computer to function as:
a determination means configured to determine whether the connection is restricted in the connection means;
a set information recording means configured to record set information on the output part or the input part for each of the unit icons; and
a connection restriction means configured to cause the determination means to compare the set information on the output part with the set information on the input part of the unit icons to be connected in the connection means, and restrict the connection when the set information is out of a range of a set value.

18. The water treatment process calculation program according to claim 17, wherein
the set information recorded in the set information recording means is a set value or a set range of a pressure.

19. The water treatment process calculation program according to claim 17, wherein
the set information recorded in the set information recording means is a set value or a set range of at least one of a pressure, a flow rate, a temperature, and a water quality.

20. The water treatment process calculation program according to claim 16 or 17, further causing the computer to function as:
an inter-unit icon arrangement interval automatic adjustment means configured to automatically adjust an arrangement interval between the unit icons of the water treatment processes in consideration of the wiring between the unit icons when the plurality of unit icons are arranged on the main screen.

21. The water treatment process calculation program according to any one of claims 16 to 20, wherein
the unit icon is at least one of the following A to H:
A. a water flow (raw water, product water, and wastewater);
B. a water treatment device (sedimentation separation, flotation separation, centrifugation, coagulation treatment, stirring treatment, aerobic treatment, anaerobic treatment, accelerated oxidation, ion exchange, adsorption, absorption, deaeration, crystallization, distillation, heat exchange, and mineral addition);
C. a membrane filtration device 1 (filter cloth, microfiltration membrane, and ultrafiltration membrane);
D. a membrane filtration device 2 (nanofiltration membrane and reverse osmosis membrane);
E. an energy recovery device (reverse pump type, water turbine type, pressure exchange type, and turbocharger);
F. a chemical liquid injection device;
G. devices (pump, blower, and compressor); and
H. piping connection (mixing and branch).

22. The water treatment process calculation program according to any one of claims 16 to 21, further causing the computer to function as:
a unit icon group arrangement means configured to predefine an arrangement of all or a part of the unit icons, and arrange the unit icons as a unit icon group on the main screen all at once.

23. The water treatment process calculation program according to claim 22, wherein
a target unit icon of the unit icon group arrangement means is an ultrafiltration membrane, a microfiltration membrane, or an energy recovery device.

24. The water treatment process calculation program according to any one of claims 16 to 23, further causing the computer to function as:
a display means configured to display a connectable unit icon on the screen so as to be visually distinguished when the unit icon is selected.

25. The water treatment process calculation program according to claim 24, wherein
the display means changes display colors of the input part and the output part for which no connection is restricted.

26. The water treatment process calculation program according to claim 24, wherein
the display means outputs an auxiliary line to the input part and the output part for which no connection is restricted.

27. The water treatment process calculation program according to any one of claims 24 to 26, wherein
when a connection that is a restricted connection recorded in the set information recording means occurs between the output part and the input part of the unit icons in the connection means, the output part of the unit icon and the unit icon for which no connection is restricted in the determination means are displayed on a connection restriction information display means.

28. The water treatment process calculation program according to any one of claims 16 to 24, further causing the computer to function as:
a data input mode switching means configured to switch the main screen of the water treatment process flow to a data input mode after the plurality of unit icons are arranged on the main screen, and the wiring between the unit icons is performed; and
a water treatment process calculation means configured to set an operating condition value to the unit icon.

29. The water treatment process calculation program according to any one of claims 16 to 24, further causing the computer to function as:
an operating condition setting means configured to input an operating condition value of the unit icon automatically set according to a type of the icon as an initial value; and
an operating condition screen display means configured to display an operating condition screen.

30. The water treatment process calculation program according to any one of claims 16 to 24, further causing the computer to function as:
an automatic calculation means configured to automatically calculate the initial value based on a fixed value or at least one of a water flow rate and a water quality on an input side and an output side.

31. A computer-readable recording medium storing the water treatment process calculation program according to any one of claims 16 to 30.

32. A water treatment process calculation system, wherein
the recording medium according to claim 31 is a server, and a water treatment process is calculable by accessing the server via a browser.
